# EUROPEAN PATENT APPLICATION

(11) **EP 4 333 482 A1**
(43) Date of publication of application: **06.03.2024**
(21) Application number: 22815072.8
(22) Date of filing: 23.05.2022
(51) Int. Cl.: H04W 12/02

(54) **VIDEO CALL PROCESSING METHOD AND APPARATUS**

(30) Priority: 31.05.2021 CN 202110601100
(71) Applicant: Huawei Technologies Co., Ltd., Shenzhen, Guangdong 518129 (CN)
(72) Inventor: LIU, Yan, Shenzhen, Guangdong 518129 (CN); YE, Jinzhou, Shenzhen, Guangdong 518129 (CN)
(74) Representative: Körber, Martin Hans
(86) International application number: PCT/CN2022/094428
(87) International publication number: WO 2022/253025

(57) **Abstract**

This application provides a video call processing method and apparatus. The video call processing method includes: A first terminal device determines a privacy protection policy for performing a video call with a second terminal device, where the privacy protection policy is for protecting a call interface of the video call, and the privacy protection policy includes at least one of the following: screenshot protection, screen recording protection, and sensitive region protection. The first terminal device executes the privacy protection policy for the video call. The video call processing method and apparatus in embodiments of this application can avoid embarrassment caused by privacy leakage and adverse impact on user confidence in a video call process.

## Description

This application claims priority to Chinese Patent Application No. 202110601100.X, filed with the China National Intellectual Property Administration on May 31, 2021 and entitled "VIDEO CALL PROCES SING METHOD AND APPARATUS", which is incorporated herein by reference in its entirety.

### TECHNICAL FIELD

This application relates to the field of communication technologies, and in particular, to a video call processing method and apparatus.

### BACKGROUND

With the evolution of the 5th generation mobile communication technology (the 5th generation mobile communication technology, 5G), a low-cost bandwidth guarantee is provided for an increasing demand for video calls. The 5G technology, which is a next-generation mobile communication technology following the 3rd generation mobile communication technology (the 3rd generation mobile communication technology, 3G) and the 4th generation mobile communication technology (the 4th generation mobile communication technology, 4G), has ultralarge capacity, ultra-high bandwidth, ultra-low latency, and other features. Videos, especially a high-definition video and an ultra-high-definition video, have higher spatial and temporal resolutions, a wider color gamut, and a wider dynamic range, which is a new round of important technology innovation following video digitalization and high definition. A 5G network provides a higher bandwidth and lower bit costs, making a high-definition video call that carries more information possible.

The video call, also called a video telephony, is usually a communication mode in which voice and images of persons are transmitted in real time between terminal devices over Internet and mobile Internet. The video call requires two networked terminal devices to implement real-time bidirectional transmission of audio and video based on integrated software or third-party software. With a rapid increase of network bandwidth and the development and popularization of hardware devices, a video call market grows rapidly. However, this accordingly brings people's concerns about privacy and security, and may affect user confidence due to privacy leakage in a

### SUMMARY

This application provides a video call processing method and apparatus, so as to avoid embarrassment caused by privacy leakage and adverse impact on user confidence in a video call process.

According to a first aspect, a video call processing method is provided. The method includes: A first terminal device determines a privacy protection policy for performing a video call with a second terminal device, where the privacy protection policy is for protecting a call interface of the video call, and the privacy protection policy includes at least one of the following: screenshot protection, screen recording protection, and sensitive region protection. The first terminal device executes the privacy protection policy for the video call.

In the foregoing solution, in a process of the call between the first terminal device and the second terminal device, the privacy protection policy is executed for the call interface of the video call between the first terminal device and the second terminal device, in other words, one or more of the screenshot protection, the screen recording protection, and the sensitive region protection are executed, so that embarrassment caused by privacy leakage during the video call can be avoided, and user confidence can be improved.

With reference to the first aspect, in some implementations of the first aspect, that the first terminal device executes the privacy protection policy for the video call includes: The first terminal device sends, to the second terminal device, a video stream for which the privacy protection policy is executed.

The video stream sent by the first terminal device to the second terminal device may be understood as follows: When the first terminal device performs the video call with the second terminal device, an image of the video call is sent to the second terminal device in a form of the video stream. More specifically, the first terminal device sends a media stream to the second terminal device, where the media stream includes the video stream and an audio stream, a video frame in the video stream is an image during the video call, and an audio frame in the audio stream is a sound during the video call.

That the first terminal device executes the privacy protection policy for the video call includes but is not limited to: The first terminal device sends, to the second terminal device, the video stream for which the privacy protection policy is executed.

More specifically, when the privacy protection policy is the sensitive region protection, the first terminal device sends, to the second terminal device, the video stream for which the sensitive region protection is executed.

In the foregoing solution, the first terminal device sends, to the second terminal device, the video stream for which the privacy protection policy is executed, so that embarrassment caused by privacy leakage can be effectively avoided, and user confidence can be improved.

With reference to the first aspect, in some implementations of the first aspect, the method further includes: The first terminal device executes the privacy protection policy for the video frame that is in the video stream.

With reference to the first aspect, in some implementations of the first aspect, if the privacy protection policy is the sensitive region protection, that the first terminal device executes the privacy protection policy for the video call includes: The first terminal device obtains information about a sensitive region. The first terminal device identifies, based on the information about the sensitive region, a video frame that corresponds to the sensitive region and that is in the video stream. The first terminal device performs blurring processing and/or model replacement on the video frame.

Optionally, the first terminal device preprocesses the video frame. The preprocessing includes but is not limited to fuzzy processing and model replacement.

In the foregoing solution, the first terminal device protects the sensitive region, so that a user can effectively avoid embarrassment caused by privacy leakage when the user does not intend to expose the user or a background in which the user is located to the other party. In addition, fuzzy processing and/or model replacement are/is performed on the sensitive region, and this helps improve user confidence.

With reference to the first aspect, in some implementations of the first aspect, if the privacy protection policy is the screenshot protection and/or the screen recording protection, that the first terminal device executes the privacy protection policy for the video call includes: The first terminal device receives first information from the second terminal device, where the first information indicates that the second terminal device performs a screenshot operation and/or a screen recording operation. The first terminal device sends second information to the second terminal device, where the second information indicates that the first terminal device prohibits the second terminal device from performing the screenshot operation and/or the screen recording operation.

Optionally, the first terminal device receives the first information from the second terminal device, where the first information is for requesting to perform a screenshot operation and/or a screen recording operation on content of the video call.

Optionally, the first terminal device receives the first information from the second terminal device, where the first information notifies the first terminal device that the second terminal device performs a screenshot operation and/or a screen recording operation on content of the video call.

In the foregoing solution, by detecting that the other party performs the screenshot operation or the screen recording operation, and using the corresponding privacy protection policy, embarrassment caused by privacy leakage of a user for which screenshot or screen recording is performed in an unknown case can be effectively avoided, thereby protecting reasonable benefits of both users.

With reference to the first aspect, in some implementations of the first aspect, that a first terminal device determines a privacy protection policy for performing a video call with a second terminal device includes: The first terminal device determines, based on a first condition, the privacy protection policy for performing the video call with the second terminal device, where the first condition includes at least one of the following: contact frequency between the first terminal device and the second terminal device, a call location of the first terminal device, and a preference of a user of the first terminal device. The first condition may also be expressed as a first principle, and the first principle includes at least one of the following: the contact frequency between the first terminal device and the second terminal device, the call location of the first terminal device, and the preference of the user of the first terminal device.

The contact frequency between the first terminal device and the second terminal device may be classified into low-frequency contact and high-frequency contact. For example, when the first terminal device and the second terminal device are in low-frequency contact, the first terminal device determines that the privacy protection policy for the video call with the second terminal device is the sensitive region protection; or when the first terminal device and the second terminal device are in high-frequency contact, the first terminal device determines that the privacy protection policy for the video call with the second terminal device is the screenshot protection and/or the screen recording protection. Alternatively, the user may define and divide a plurality of pieces of contact frequency, and determine, for the plurality of pieces of contact frequency, a privacy protection policy corresponding to each contact frequency.

In the foregoing solution, the first terminal device determines the privacy protection policy according to a specific rule, to be specific, determines the corresponding privacy protection policy based on the contact frequency of both users, the call location of the first terminal device, and the preference of the user of the first terminal device. This helps the user simply, flexibly, and quickly determine the privacy protection policy when the user forgets to enable the privacy protection policy, and also helps reduce signaling overheads and improve system running efficiency.

With reference to the first aspect, in some implementations of the first aspect, the method further includes: The first terminal device receives subscription information from a user data server, where the subscription information includes information about the privacy protection policy to which the first terminal device subscribes. That the first terminal device determines the privacy protection policy based on a first condition includes: The first terminal device determines the privacy protection policy based on the first condition and the subscription information.

In the foregoing solution, the first terminal device receives the subscription information, and determines the privacy protection policy based on the first condition and the subscription information. The privacy protection policy may be determined when the corresponding privacy protection policy is subscribed to, and this can promote healthy development of the video call and may help promotion of the video call in a to-customer market.

With reference to the first aspect, in some implementations of the first aspect, that a first terminal device determines a privacy protection policy for performing a video call with a second terminal device includes: The first terminal device obtains the privacy protection policy from the second terminal device or a network device.

The network device includes but is not limited to an application service device and a media processing device.

The foregoing solution may also be understood as follows: The first terminal device may execute the privacy protection policy regardless of whether the first terminal device acts as a calling device or a called device.

According to a second aspect, a video call processing method is provided. The method includes: A second terminal device determines a privacy protection policy for performing a video call with a first terminal device, where the privacy protection policy is for protecting a call interface of the video call, and the privacy protection policy includes at least one of the following: screenshot protection, screen recording protection, and sensitive region protection. The second terminal device executes the privacy protection policy for the video call.

In the foregoing solution, in a process of the call between the first terminal device and the second terminal device, the privacy protection policy is executed for the call interface of the video call between the first terminal device and the second terminal device, in other words, one or more of the screenshot protection, the screen recording protection, and the sensitive region protection are executed, so that embarrassment caused by privacy leakage during the video call can be avoided, and user confidence can be improved.

With reference to the second aspect, in some implementations of the second aspect, that the second terminal device executes the privacy protection policy for the video call includes: The second terminal device sends, to the first terminal device, a video stream for which the privacy protection policy is executed.

The video stream sent by the first terminal device to the second terminal device may be understood as follows: When the first terminal device performs the video call with the second terminal device, an image of the video call is sent to the second terminal device in a form of the video stream. More specifically, the first terminal device sends a media stream to the second terminal device, where the media stream includes the video stream and an audio stream, a video frame in the video stream is an image during the video call, and an audio frame in the audio stream is a sound during the video call.

That the second terminal device executes the privacy protection policy for the video call includes but is not limited to: The second terminal device sends, to the first terminal device, the video stream for which the privacy protection policy is executed.

More specifically, when the privacy protection policy is the sensitive region protection, the second terminal device sends, to the first terminal device, the video stream for which the sensitive region protection is executed.

With reference to the second aspect, in some implementations of the second aspect, the method further includes: The second terminal device executes the privacy protection policy for the video frame that is in the video stream.

With reference to the second aspect, in some implementations of the second aspect, if the privacy protection policy is the sensitive region protection, that the second terminal device executes the privacy protection policy for the video call includes: The second terminal device obtains information about a sensitive region. The second terminal device identifies, based on the information about the sensitive region, a video frame that corresponds to the sensitive region and that is in the video stream. The second terminal device performs blurring processing and/or model replacement on the video frame.

Optionally, the second terminal device preprocesses the video frame. The preprocessing includes but is not limited to fuzzy processing and model replacement.

With reference to the second aspect, in some implementations of the second aspect, if the privacy protection policy is the screenshot protection and/or the screen recording protection, that the second terminal device executes the privacy protection policy for the video call includes: The second terminal device receives first information from the first terminal device, where the first information indicates that the first terminal device performs a screenshot operation and/or a screen recording operation. The second terminal device sends second information to the first terminal device, where the second information indicates that the second terminal device prohibits the first terminal device from performing the screenshot operation and/or the screen recording operation.

Optionally, the second terminal device receives the first information from the first terminal device, where the first information is for requesting to perform the screenshot operation and/or the screen recording operation on content of the video call.

Optionally, the second terminal device receives the first information from the first terminal device, where the first information notifies the second terminal device that the first terminal device performs the screenshot operation and/or the screen recording operation on the content of the video call.

If the first terminal device also determines that the privacy protection policy is the screenshot protection and/or the screen recording protection, the method further includes: The second terminal device sends first information to the first terminal device, where the first information indicates that the second terminal device performs a screenshot operation and/or a screen recording operation. The second terminal device receives second information from the first terminal device, where the second information indicates that the first terminal device prohibits the second terminal device from performing the screenshot operation and/or the screen recording operation.

Optionally, if the first terminal device prohibits the second terminal device from performing the screenshot operation and/or the screen recording operation, the second terminal device displays a first interface, where the first interface is for reminding a user that the second terminal device is prohibited from screenshot during the video call.

With reference to the second aspect, in some implementations of the second aspect, that a second terminal device determines a privacy protection policy for performing a video call with a first terminal device includes: The second terminal device determines, based on a first condition, the privacy protection policy for performing the video call with the first terminal device, where the first condition includes at least one of the following: contact frequency between the first terminal device and the second terminal device, a call location of the second terminal device, and a preference of a user of the first terminal device.

The first condition may also be expressed as a first principle, and the first principle includes at least one of the following: the contact frequency between the first terminal device and the second terminal device, the call location of the second terminal device, and the preference of the user of the first terminal device.

The contact frequency between the first terminal device and the second terminal device may be classified into low-frequency contact and high-frequency contact. For example, when the first terminal device and the second terminal device are in low-frequency contact, the second terminal device determines that the privacy protection policy for the video call with the first terminal device is the sensitive region protection; or when the first terminal device and the second terminal device are in high-frequency contact, the second terminal device determines that the privacy protection policy for the video call with the first terminal device is the screenshot protection and/or the screen recording protection. Alternatively, the user may define and divide a plurality of pieces of contact frequency, and determine, for the plurality of pieces of contact frequency, a privacy protection policy corresponding to each contact frequency.

With reference to the second aspect, in some implementations of the second aspect, the method further includes: The second terminal device receives subscription information from a user data server, where the subscription information includes information about the privacy protection policy to which the second terminal device subscribes. That the second terminal device determines the privacy protection policy based on a first condition includes: The second terminal device determines the privacy protection policy based on the first condition and the subscription information.

With reference to the second aspect, in some implementations of the second aspect, that a second terminal device determines a privacy protection policy for performing a video call with a first terminal device includes: The second terminal device obtains the privacy protection policy from the first terminal device or a network device.

The network device includes but is not limited to an application service device and a media processing device.

The foregoing solution may also be understood as follows: The second terminal device may execute the privacy protection policy regardless of whether the second terminal device acts as a calling device or a called device.

According to a third aspect, a video call processing method is provided. The method includes: A network device receives request information from a first terminal device, where the request information is for requesting the network device to execute a privacy protection policy when the first terminal device and a second terminal device perform a video call, the privacy protection policy is for protecting an interface of the video call, and the privacy protection policy includes sensitive region protection. The network device executes the privacy protection policy for the video call.

In the foregoing solution, the network device receives the information indicating that the first terminal device requests to execute the privacy protection policy, and may execute the privacy protection policy when the first terminal device does not have a capability of executing the privacy protection policy or cannot execute the privacy protection policy. This brings a double assurance to a video call process, so as to avoid embarrassment caused by privacy leakage, thereby improving user confidence.

With reference to the third aspect, in some implementations of the third aspect, the method further includes: The network device sends a first calling message to the first terminal device, where the first calling message includes 5-tuple information of a media processing device.

In the foregoing solution, the network device sends the 5-tuple information of the media processing device to the first terminal device, so that a video stream is sent to the media processing device, and the media processing device performs corresponding processing on the video stream, thereby protecting user privacy.

With reference to the third aspect, in some implementations of the third aspect, the method further includes: The network device sends a second calling message to the second terminal device, where the second calling message includes the 5-tuple information of the media processing device.

In the foregoing solution, the network device sends the 5-tuple information of the media processing device to the second terminal device, so that the media processing device sends a processed video stream to the second terminal device, thereby protecting user privacy.

According to a fourth aspect, a video call processing method is provided. The method includes: A first terminal device determines a privacy protection policy for performing a video call with a second terminal device, where the privacy protection policy is for protecting a call interface of the video call, and the privacy protection policy includes sensitive region protection. The first terminal device sends request information to a network device, where the request message includes the privacy protection policy, and the request information is for requesting the network device to execute the privacy protection policy when the first terminal device and the second terminal device perform the video call.

With reference to the fourth aspect, in some implementations of the fourth aspect, that a first terminal device determines a privacy protection policy for performing a video call with a second terminal device includes: The first terminal device determines, based on a first condition, the privacy protection policy for performing the video call with the second terminal device, where the first condition includes at least one of the following: contact frequency between the first terminal device and the second terminal device, a location of the first terminal device, and a preference of a user of the first terminal device.

With reference to the fourth aspect, in some implementations of the fourth aspect, the method further includes: The first terminal device receives a first calling message from the network device, where the first calling message includes 5-tuple information of a media processing device. The first terminal device sends a video stream to the media processing device based on the 5-tuple information, where the privacy protection policy is not executed for a video frame that is in the video stream.

The video stream sent by the first terminal device to the second terminal device may be understood as follows: When the first terminal device performs the video call with the second terminal device, an image of the video call is sent to the second terminal device in a form of the video stream. More specifically, the first terminal device sends a media stream to the second terminal device, where the media stream includes the video stream and an audio stream, a video frame in the video stream is an image during the video call, and an audio frame in the audio stream is a sound during the video call.

According to a fifth aspect, a video call processing method is provided. The method includes: A network device determines a privacy protection policy used when a first terminal device and a second terminal device perform a video call, where the privacy protection policy is for protecting a call interface of the video call, and the privacy protection policy includes sensitive region protection. The network device executes the privacy protection policy for the video call.

In the foregoing solution, the network device determines and executes the corresponding privacy protection policy, and may execute, in a process of the call between the first terminal device and the second terminal device, the privacy protection policy for the call interface of the video call between the first terminal device and the second terminal device, so that embarrassment caused by privacy leakage during the video call can be avoided, thereby improving user confidence.

With reference to the fifth aspect, in some implementations of the fifth aspect, that the network device executes the privacy protection policy for the video call includes: When the first terminal device does not execute the privacy protection policy for the video call, the network device executes the privacy protection policy for the video call.

In the foregoing solution, the network device may execute the privacy protection policy when the first terminal device does not have a capability of executing the privacy protection policy or cannot execute the privacy protection policy. This brings a double assurance to a video call process, so as to avoid embarrassment caused by privacy leakage, thereby improving user confidence.

Specifically, the network device sends first indication information to the first terminal device, where the first indication information indicates the first terminal device to execute the privacy protection policy for the video call. The network device receives a response message from the first terminal device, where the response message does not include first information, and the first information is for indicating the first terminal device to execute the privacy protection policy for the video call.

With reference to the fifth aspect, in some implementations of the fifth aspect, the method further includes: The network device obtains second information and subscription information, where the second information indicates contact frequency between the first terminal device and the second terminal device, and the subscription information includes information about the privacy protection policy to which the first terminal device subscribes. That a network device determines a privacy protection policy used when a first terminal device and a second terminal device perform a video call includes: The network device determines, based on the second information and the subscription information, the privacy protection policy used when the first terminal device and the second terminal device perform the video call.

In the foregoing solution, the first terminal device determines the privacy protection policy according to a specific rule, to be specific, determines the privacy protection policy based on the contact frequency of both users. This helps the user simply, flexibly, and quickly determine the privacy protection policy when the user forgets to enable the privacy protection policy, and also helps reduce signaling overheads and improve system running efficiency.

With reference to the fifth aspect, in some implementations of the fifth aspect, the method further includes: The network device sends a first calling message to the first terminal device, where the first calling message includes 5-tuple information of a media processing device.

With reference to the fifth aspect, in some implementations of the fifth aspect, the method further includes: The network device sends a second calling message to the second terminal device, where the second calling message includes the 5-tuple information of the media processing device.

According to a sixth aspect, a video call processing method is provided. The method includes: An application service device receives request information from a first terminal device, where the request information is for requesting a network device to execute a privacy protection policy when the first terminal device and a second terminal device perform a video call, the privacy protection policy is for protecting an interface of the video call, and the privacy protection policy includes sensitive region protection. The application service device sends a calling request to a media processing device, where the calling request is for requesting the application service device to establish a connection to the media processing device, and the media processing device is configured to execute the privacy protection policy for the video call.

With reference to the sixth aspect, in some implementations of the sixth aspect, the method further includes: The application server device sends a first calling message to the first terminal device, where the first calling message includes 5-tuple information of the media processing device.

With reference to the sixth aspect, in some implementations of the sixth aspect, the method further includes: The application server device sends a second calling message to the second terminal device, where the second calling message includes the 5-tuple information of the media processing device.

According to a seventh aspect, a video call processing method is provided. The method includes: An application service device determines a privacy protection policy used when a first terminal device and a second terminal device perform a video call, where the privacy protection policy is for protecting a call interface of the video call, and the privacy protection policy includes sensitive region protection. The application service device sends a calling request to a media processing device, where the calling request is for requesting the application service device to establish a connection to the media processing device, and the media processing device is configured to execute the privacy protection policy for the video call.

With reference to the seventh aspect, in some implementations of the seventh aspect, that the application service device sends a calling request to a media processing device includes: When the first terminal device does not execute the privacy protection policy for the video call, the application service device sends the calling request to the media processing device.

With reference to the seventh aspect, in some implementations of the seventh aspect, the application service device obtains second information and subscription information, where the second information indicates contact frequency between the first terminal device and the second terminal device, and the subscription information includes information about the privacy protection policy to which the first terminal device subscribes. That an application service device determines a privacy protection policy used when a first terminal device and a second terminal device perform a video call includes: The application service device determines, based on the second information and the subscription information, the privacy protection policy used when the first terminal device and the second terminal device perform the video call.

With reference to the seventh aspect, in some implementations of the seventh aspect, the method further includes: The application server device sends a first calling message to the first terminal device, where the first calling message includes 5-tuple information of the media processing device.

With reference to the seventh aspect, in some implementations of the seventh aspect, the method further includes: The application server device sends a second calling message to the second terminal device, where the second calling message includes the 5-tuple information of the media processing device.

According to an eighth aspect, a video call processing method is provided. The method includes: A media processing device receives a first video stream from a first terminal device. The media processing device executes a privacy protection policy for the first video stream to obtain a second video stream, where the privacy protection policy is for protecting a call interface of a video call between the first terminal device and a second terminal device, and the privacy protection policy includes sensitive region protection. The media processing device sends a second video stream to the second terminal device.

With reference to the eighth aspect, in some implementations of the eighth aspect, that the media processing device executes a privacy protection policy for the first video stream to obtain a second video stream includes: The media processing device obtains information about a sensitive region from the first terminal device. The media processing device identifies, based on the information about the sensitive region, a video frame that corresponds to a sensitive region and that is in the first video stream. The media processing device performs blurring processing and/or model replacement on the video frame to obtain the second video stream.

With reference to the eighth aspect, in some implementations of the eighth aspect, the method further includes: The media processing device receives a calling request from an application service device, where the calling request is for requesting the application service device to establish a connection with the media processing device, and the media processing device is configured to execute the privacy protection policy for the video call.

According to a ninth aspect, a video call processing apparatus is provided. The apparatus includes a processing module. The processing module is configured to: determine a privacy protection policy for performing a video call with a second terminal device, where the privacy protection policy is for protecting a call interface of the video call, and the privacy protection policy includes at least one of the following: screenshot protection, screen recording protection, and sensitive region protection; and execute the privacy protection policy for the video call.

With reference to the ninth aspect, in some implementations of the ninth aspect, the apparatus further includes a transceiver module, and the transceiver module is configured to send, to the second terminal device, a video stream for which the privacy protection policy is executed.

With reference to the ninth aspect, in some implementations of the ninth aspect, the processing module is further configured to execute the privacy protection policy for a video frame that is in the video stream.

With reference to the ninth aspect, in some implementations of the ninth aspect, if the privacy protection policy is the sensitive region protection, the processing module is specifically configured to: obtain information about a sensitive region; identify, based on the information about the sensitive region, a video frame that corresponds to the sensitive region and that is in the video stream; and perform blurring processing and/or model replacement on the video frame.

With reference to the ninth aspect, in some implementations of the ninth aspect, if the privacy protection policy is the screenshot protection and/or the screen recording protection, the transceiver module is further configured to: receive first information from the second terminal device, where the first information indicates that the second terminal device performs a screenshot operation and/or a screen recording operation; and send second information to the second terminal device, where the second information indicates that the first terminal device prohibits the second terminal device from performing the screenshot operation and/or the screen recording operation.

With reference to the ninth aspect, in some implementations of the ninth aspect, the processing module is specifically configured to: determine, based on a first condition, the privacy protection policy for performing the video call with the second terminal device, where the first condition includes at least one of the following: contact frequency between the first terminal device and the second terminal device, a location of the first terminal device, and a preference of a user of the first terminal device.

With reference to the ninth aspect, in some implementations of the ninth aspect, the transceiver module is further configured to receive subscription information from a user data server, where the subscription information includes information about the privacy protection policy to which the first terminal device subscribes. The processing module is further configured to determine the privacy protection policy based on the first condition and the subscription information.

With reference to the ninth aspect, in some implementations of the ninth aspect, the transceiver module is further configured to obtain the privacy protection policy from the second terminal device or a network device.

According to a tenth aspect, a video call processing apparatus is provided. The apparatus includes a processing module. The processing module is configured to: determine a privacy protection policy for performing a video call with a first terminal device, where the privacy protection policy is for protecting a call interface of the video call, and the privacy protection policy includes at least one of the following: screenshot protection, screen recording protection, and sensitive region protection; and execute the privacy protection policy for the video call.

With reference to the tenth aspect, in some implementations of the tenth aspect, the apparatus further includes a transceiver module, and the transceiver module is configured to send, to the first terminal device, a video stream for which the privacy protection policy is executed.

With reference to the tenth aspect, in some implementations of the tenth aspect, the processing module is further configured to execute the privacy protection policy for a video frame that is in the video stream.

With reference to the tenth aspect, in some implementations of the tenth aspect, if the privacy protection policy is the sensitive region protection, the processing module is specifically configured to: obtain information about a sensitive region; identify, based on the information about the sensitive region, a video frame that corresponds to the sensitive region and that is in the video stream; and perform blurring processing and/or model replacement on the video frame.

With reference to the tenth aspect, in some implementations of the tenth aspect, if the privacy protection policy is the screenshot protection and/or the screen recording protection, the transceiver module is configured to: receive first information from the first terminal device, where the first information indicates that the first terminal device performs a screenshot operation and/or a screen recording operation; and send second information to the first terminal device, where the second information indicates that the second terminal device prohibits the first terminal device from performing the screenshot operation and/or the screen recording operation.

Optionally, the transceiver module receives the first information from the first terminal device, where the first information is for requesting to perform the screenshot operation and/or the screen recording operation on content of the video call.

Optionally, the transceiver module receives the first information from the first terminal device, where the first information notifies the second terminal device that the first terminal device performs the screenshot operation and/or the screen recording operation on the content of the video call.

If the privacy protection policy is the screenshot protection and/or the screen recording protection, the transceiver module is further configured to: send the first information to the first terminal device, where the first information indicates that the second terminal device performs the screenshot operation and/or the screen recording operation; and receive the second information from the first terminal device, where the second information indicates that the first terminal device prohibits the second terminal device from performing the screenshot operation and/or the screen recording operation.

Optionally, if the processing module is further configured to prohibit the second terminal device from performing the screenshot operation and/or the screen recording operation, the processing module is further configured to display a first interface, where the first interface is for reminding a user that the second terminal device is prohibited from screenshot during the video call.

With reference to the tenth aspect, in some implementations of the tenth aspect, the processing module is specifically configured to: determine, based on a first condition, the privacy protection policy for performing the video call with the first terminal device, where the first condition includes at least one of the following: contact frequency between the first terminal device and the second terminal device, a call location of the second terminal device, and a preference of a user of the first terminal device.

With reference to the tenth aspect, in some implementations of the tenth aspect, the transceiver module is further configured to receive subscription information from a user data server, where the subscription information includes information about the privacy protection policy to which the second terminal device subscribes. The processing module is further configured to determine the privacy protection policy based on the first condition and the subscription information.

With reference to the tenth aspect, in some implementations of the tenth aspect, the transceiver module is further configured to obtain the privacy protection policy from the first terminal device or a network device.

According to an eleventh aspect, a video call processing apparatus is provided. The apparatus includes a transceiver module and a processing module. The transceiver module is configured to receive request information from a first terminal device, where the request information is for requesting a network device to execute a privacy protection policy when the first terminal device and a second terminal device perform a video call, the privacy protection policy is for protecting an interface of the video call, and the privacy protection policy includes sensitive region protection. The processing module is configured to execute the privacy protection policy for the video call.

With reference to the eleventh aspect, in some implementations of the eleventh aspect, the transceiver module is further configured to send a first calling message to the first terminal device, where the first calling message includes 5-tuple information of a media processing device.

With reference to the eleventh aspect, in some implementations of the eleventh aspect, the transceiver module is further configured to send a second calling message to the second terminal device, where the second calling message includes the 5-tuple information of the media processing device.

According to a twelfth aspect, a video call processing apparatus is provided. The apparatus includes a processing module and a transceiver module. The processing module is configured to determine a privacy protection policy for performing a video call with a second terminal device, where the privacy protection policy is for protecting a call interface of the video call, and the privacy protection policy includes sensitive region protection. The transceiver module is configured to send request information to a network device, where the request message includes the privacy protection policy, and the request information is for requesting the network device to execute the privacy protection policy when a first terminal device and the second terminal device perform the video call.

With reference to the twelfth aspect, in some implementations of the twelfth aspect, the processing module is specifically configured to: determine, based on a first condition, the privacy protection policy for performing the video call with the second terminal device, where the first condition includes at least one of the following: contact frequency between the first terminal device and the second terminal device, a location of the first terminal device, and a preference of a user of the first terminal device.

With reference to the twelfth aspect, in some implementations of the twelfth aspect, the transceiver module is further configured to: receive a first calling message from the network device, where the first calling message includes 5-tuple information of a media processing device; and send a video stream to the media processing device based on the 5-tuple information, where the privacy protection policy is not executed for a video frame that is in the video stream.

According to a thirteenth aspect, a video call processing apparatus is provided. The apparatus includes a processing module, and the processing module is specifically configured to: determine a privacy protection policy used when a first terminal device and a second terminal device perform a video call, where the privacy protection policy is for protecting a call interface of the video call, and the privacy protection policy includes sensitive region protection; and execute the privacy protection policy for the video call.

With reference to the thirteenth aspect, in some implementations of the thirteenth aspect, the processing module is specifically configured to: when the first terminal device does not execute the privacy protection policy for the video call, execute the privacy protection policy for the video call.

With reference to the thirteenth aspect, in some implementations of the thirteenth aspect, the processing module is specifically configured to: obtain second information and subscription information, where the second information indicates contact frequency between the first terminal device and the second terminal device, and the subscription information includes information about the privacy protection policy to which the first terminal device subscribes; and determine, based on the second information and the subscription information, the privacy protection policy used when the first terminal device and the second terminal device perform the video call.

With reference to the thirteenth aspect, in some implementations of the thirteenth aspect, the apparatus further includes a transceiver module, and the transceiver module is configured to send a first calling message to the first terminal device, where the first calling message includes 5-tuple information of a media processing device.

With reference to the thirteenth aspect, in some implementations of the thirteenth aspect, the transceiver module is further configured to send a second calling message to the second terminal device, where the second calling message includes the 5-tuple information of the media processing device.

According to a fourteenth aspect, a video call processing apparatus is provided. The apparatus includes a transceiver module. The transceiver module is specifically configured to: receive request information from a first terminal device, where the request information is for requesting a network device to execute a privacy protection policy when the first terminal device and a second terminal device perform a video call, the privacy protection policy is for protecting an interface of the video call, and the privacy protection policy includes sensitive region protection; and send a calling request to a media processing device, where the calling request is for requesting an application service device to establish a connection to the media processing device, and the media processing device is configured to execute the privacy protection policy for the video call.

With reference to the fourteenth aspect, in some implementations of the fourteenth aspect, the transceiver module is further configured to send a first calling message to the first terminal device, where the first calling message includes 5-tuple information of the media processing device.

With reference to the fourteenth aspect, in some implementations of the fourteenth aspect, the transceiver module is further configured to send a second calling message to the second terminal device, where the second calling message includes the 5-tuple information of the media processing device.

According to a fifteenth aspect, a video call processing apparatus is provided. The apparatus includes a processing module and a transceiver module. The processing module is configured to determine a privacy protection policy used when a first terminal device and a second terminal device perform a video call, where the privacy protection policy is for protecting a call interface of the video call, and the privacy protection policy includes sensitive region protection. The transceiver module is configured to send a calling request to a media processing device, where the calling request is for requesting an application service device to establish a connection to the media processing device, and the media processing device is configured to execute the privacy protection policy for the video call.

With reference to the fifteenth aspect, in some implementations of the fifteenth aspect, the transceiver module is further configured to: when the first terminal device does not execute the privacy protection policy for the video call, send the calling request to the media processing device.

With reference to the fifteenth aspect, in some implementations of the fifteenth aspect, the processing module is specifically configured to: obtain second information and subscription information, where the second information indicates contact frequency between the first terminal device and the second terminal device, and the subscription information includes information about the privacy protection policy to which the first terminal device subscribes; and determine, based on the second information and the subscription information, the privacy protection policy used when the first terminal device and the second terminal device perform the video call.

With reference to the fifteenth aspect, in some implementations of the fifteenth aspect, the transceiver module is further configured to send a first calling message to the first terminal device, where the first calling message includes 5-tuple information of the media processing device.

With reference to the fifteenth aspect, in some implementations of the fifteenth aspect, the transceiver module is further configured to send a second calling message to the second terminal device, where the second calling message includes the 5-tuple information of the media processing device.

According to a sixteenth aspect, a video call processing apparatus is provided. The apparatus includes a transceiver module and a processing module. The transceiver module is configured to: receive a first video stream from a first terminal device, and send a second video stream to a second terminal device. The processing module is configured to execute a privacy protection policy for the first video stream to obtain the second video stream, where the privacy protection policy is for protecting a call interface of a video call between the first terminal device and the second terminal device, and the privacy protection policy includes sensitive region protection.

With reference to the sixteenth aspect, in some implementations of the sixteenth aspect, the transceiver module is further configured to obtain information about a sensitive region from the first terminal device. The processing module is specifically configured to: identify, based on the information about the sensitive region, a video frame corresponding to the sensitive region that is in the first video stream; and perform blur processing and/or model replacement on the video frame to obtain the second video stream.

With reference to the sixteenth aspect, in some implementations of the sixteenth aspect, the transceiver module is further configured to receive a calling request from an application service device, where the calling request is for requesting the application service device to establish a connection with a media processing device, and the media processing device is configured to execute the privacy protection policy for the video call.

According to a seventeenth aspect, a communication apparatus is provided and includes a processor. The processor is coupled to a memory, and may be configured to execute instructions or data in the memory, to implement the method in any possible implementation of the first aspect to the eighth aspect. Optionally, the communication apparatus further includes a storage medium, and the storage medium stores instructions. Optionally, the communication apparatus further includes a communication interface, and the processor is coupled to the communication interface.

According to an eighteenth aspect, a processor is provided. The processor includes an input circuit, an output circuit, and a processing circuit. The processing circuit is configured to: receive a signal through the input circuit, and transmit a signal through the output circuit, to enable the processor to perform the method in any one of the possible implementations of the first aspect to the eighth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit acts as the input circuit and the output circuit at different moments. Specific implementations of the processor and the various circuits are not limited in embodiments of this application.

According to a nineteenth aspect, a processing apparatus is provided. The apparatus includes a processor and a memory. The processor is configured to: read instructions stored in a memory, receive a signal through a receiver, and transmit a signal through a transmitter, to perform the method in any possible implementation of the first aspect to the eighth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in embodiments of this application.

It can be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processing apparatus in the nineteenth aspect may be one or more chips. The processor in the processing apparatus may be implemented by hardware, or may be implemented by software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a twentieth aspect, a computer program product is provided. The computer program product includes a computer program (which may also be referred to as code or instructions). When the computer program is run, a computer is enabled to perform the method according to any possible implementation of the first aspect to the eighth aspect.

According to a twenty-first aspect, a computer-readable storage medium is provided. The computer-readable storage medium stores a computer program (which may also be referred to as code or instructions). When the computer program is run on a computer, the computer is enabled to perform the method in any possible implementation of the first aspect to the eighth aspect.

According to a twenty-second aspect, a communication system is provided, and includes the foregoing first terminal device and second terminal device. Optionally, the communication system further includes the foregoing network device. Optionally, the communication system further includes the foregoing application service device and media processing device.

### BRIEF DESCRIPTION OF DRAWINGS

FIG. 1 is a schematic diagram of a basic architecture of an IMS network system in a conventional technology;
FIG. 2 is a schematic block diagram of a video call processing method according to an embodiment of this application;
FIG. 3 is a schematic flowchart of another video call processing method according to an embodiment of this application;
FIG. 4 shows an interface in a video call according to an embodiment of this application;
FIG. 5 shows an interface in another video call according to an embodiment of this application;
FIG. 6A and FIG. 6B are a schematic flowchart of another video call processing method according to an embodiment of this application;
FIG. 7 is a schematic flowchart of another video call processing method according to an embodiment of this application;
FIG. 8A and FIG. 8B are a schematic flowchart of another video call processing method according to an embodiment of this application;
FIG. 9 is a schematic flowchart of a video call processing method according to an embodiment of this application;
FIG. 10 is a schematic flowchart of another video call processing method according to an embodiment of this application;
FIG. 11 is a schematic block diagram of a video call processing method according to an embodiment of this application;
FIG. 12A and FIG. 12B are a schematic flowchart of another video call processing method according to an embodiment of this application;
FIG. 13 is a schematic block diagram of a video call processing apparatus according to an embodiment of this application;
FIG. 14 is a schematic diagram of a structure of a first terminal device according to an embodiment of this application; and
FIG. 15 is a schematic diagram of a structure of a network device according to an embodiment of this application.

### DESCRIPTION OF EMBODIMENTS

The following describes technical solutions of this application with reference to accompanying drawings.

Before a call system provided in embodiments of this application is described, a basic architecture of a current IP multimedia subsystem (IP multimedia subsystem, IMS) network system is first described with reference to the accompanying drawings. An IMS is introduced by a 3rd generation partnership project (3rd generation partnership project, 3GPP) organization based on an original packet bearer network. The IMS can provide a user with both a traditional voice service and rich multimedia experience.

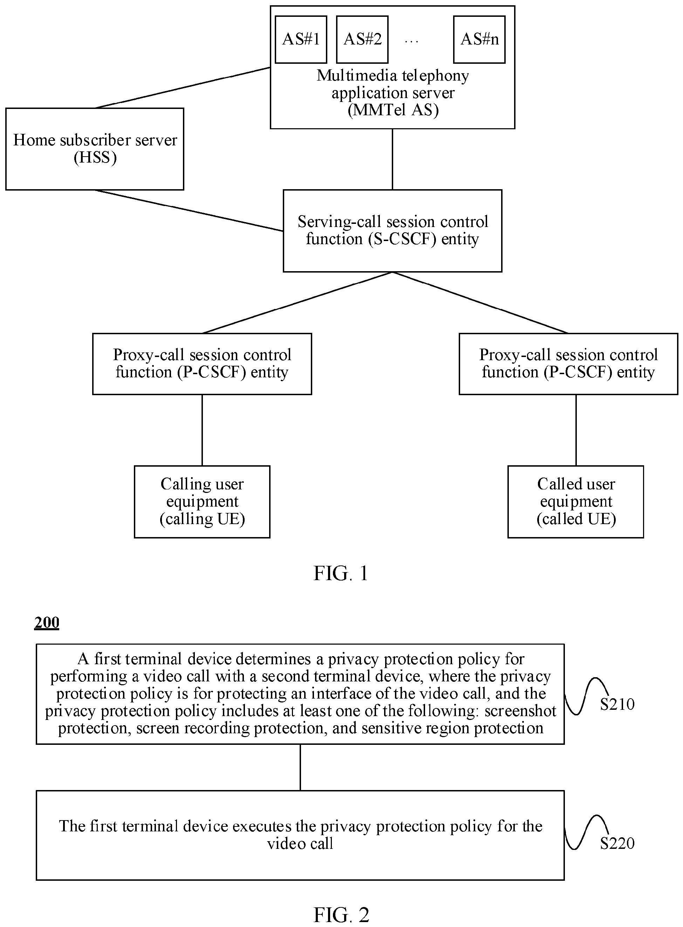

FIG. 1 is a schematic diagram of a basic architecture of an IMS network system in a conventional technology. Functions of some network elements are as follows.

User equipment (user equipment, LTE) includes calling user equipment (which may also be referred to as calling UE or a caller) and called user equipment (which may also be referred to as called UE or a callee). The calling UE is configured to initiate a phone call to the called UE, the called UE is configured to receive a call of the calling UE, and the user equipment includes but is not limited to a mobile phone (mobile phone), a smart band, a tablet computer, or a computer with a wireless transceiver function.

A call session control function (call session control function, CSCF), which is a session control function entity in an IMS, implements main softswitch control functions in a multimedia call in the IMS. CSCFs are further classified into a proxy-call session control function (proxy-call session control function, P-CSCF) entity, an interrogating-call session control function (interrogating-call session control function, I-CSCF) entity, and a serving-call session control (serving-call session control function, S-CSCF) entity. The CSCF may be referred to as a call control server.

A P-CSCF may be located in an access network in which UE is currently located. As the first contact network element for the LTE to access an IMS network, the P-CSCF forwards a session initiation protocol (session initiation protocol, SIP) message of the UE to an IMS core network, and forwards the received SIP message to the UE.

An S-CSCF, acting as a core call control entity, implements basic call control functions, where an SIP message is to be processed by the S-CSCF, and the basic call control functions include main control functions such as routing, application server (application server, AS) service triggering, and redirection.

A multimedia telephony (multimedia telephony, MMTel) AS is configured to provide a user with various services, such as a basic voice or video call service, and various supplementary services, and is a server implementing a specific service. Generally, the MMTel AS is triggered by an S-CSCF based on a user request and a trigger condition.

The 3GPP defines basic specifications of an MMTel service. In addition to the basic voice call service, the MMTel service includes 20 more supplementary services, such as a customized Ring Back Tone service, a call transfer service, and a voice mailbox service. For a current IMS mechanism, the foregoing 20 more MMTel services including the basic voice call service are generally provided as a whole.

That is, because the MMTel may include a plurality of services (for example, the existing 20 more services), the MMTel may also correspond to a plurality of ASs. For example, FIG. 1 includes n (where n is an integer greater than 2) ASs in total, and each AS is configured to provide a different MMTel service.

A home subscriber server (home subscriber server, HSS) records user information and service data of each IMS user, works with a CSCF to implement a routing function, and provides functions such as authentication and authorization. User subscription data is stored in the HSS and downloaded to an S-CSCF during user registration. The user subscription data stores an initial filter criteria (initial filter criteria, iFC) of the user and address information of an AS that provides a service. The service data is downloaded from the HSS to the AS during user registration. The AS uses the service data to complete user service processing. The functions of the HSS may be implemented by a unified data management (unified data management, UDM) device.

As shown in FIG. 1, when the calling UE initiates an audio/video call to the called UE, the calling UE may send a session initiation protocol invite (SIP invite) message to the S-CSCF through the P-CSCF. The S-CSCF may download, from the HSS, an iFC message that is statically configured in advance and that is for the calling UE, and determine, in an iFC triggering mechanism, which supplementary services are triggered by the call. Corresponding ASs provide the supplementary services.

Currently, when the calling UE initiates the audio/video call to the called UE, problems such as leakage of background locations of users (calling and called persons), and insufficient confidence of the users in a call process may exist. For the problem of background location leakage, some third-party software provides a function of blurring a background, or a function of selecting a preset recorded video based on user customization, and then synthesizing an existing profile picture and the preset video as a video of a current video call. For the problem of user confidence, a series of video technologies, such as virtual background, beauty, video noise reduction, and dark field enhancement, are proposed to improve user confidence. The introduction of these solutions can partially address privacy concerns, but do not eliminate privacy concerns.

For example, in some current application scenarios, when maintenance needs to be performed or inspection personnel need to perform preliminary positioning, there is a video call requirement. For example, when a user uses a rear camera of a mobile phone to take photos for performing positioning for the other party, an image of the user is presented to the other party because the user is unfamiliar with the camera, which causes embarrassment. For another example, currently, a video call is basically limited to acquaintances, but a user may not intend the video call to be taken a screenshot of, saved, or even shared without permission.

In view of the foregoing problems, this application provides a video call processing method. A video call image is protected on a terminal device side or a network device side, so as to ensure reasonable benefits of both video call users and avoid unnecessary embarrassment, thereby protecting privacy of the video call users and improving user confidence. In addition, this can also promote healthy development of a video call and may help promotion of the video call in a to-customer (to customer, 2B) market.

FIG. 2 is a schematic diagram of a video call processing method 100 according to an embodiment of this application. The method 100 includes the following steps.

S210: A first terminal device determines a privacy protection policy for performing a video call with a second terminal device, where the privacy protection policy is for protecting an interface of the video call, and the privacy protection policy includes at least one of the following: screenshot protection, screen recording protection, and sensitive region protection.

Optionally, the first terminal device may act as a calling device, or may act as a called device. For example, when the first terminal device acts as the calling device, the second terminal device is the called device; or when the first terminal device is the called device, the second terminal device is the calling device.

Optionally, the first terminal device determines the privacy protection policy for performing the video call with the second terminal device, and the determining may be performed according to a specific principle (preset principle), which is referred to as a first condition below. The first condition includes at least one of the following: contact frequency between the first terminal device and the second terminal device, a location of the first terminal device, and a preference of a user.

In addition to the foregoing mentioned content, the first condition may alternatively be defined by the user of the first terminal device. For example, the user of the first terminal device classifies contacts in an address book of the first terminal device, and sets a privacy protection policy of each category for the category. As long as the first terminal device can determine the privacy protection policy based on the first condition, the first condition falls within the protection scope of embodiments of this application, and the first condition is not exhaustively listed in this application.

The privacy protection policy includes at least one of the following: screenshot protection, screen recording protection, and sensitive region protection.

Specifically, the screenshot protection may be understood as that screenshot is not allowed in an ongoing video call process. To be specific, in the video call process between the first terminal device and the second terminal device, if a user of the second terminal device intends to take a screenshot of a call interface of the second terminal device, because the first terminal device enables the screenshot protection, the second terminal device is not allowed to take a screenshot. Similarly, the screen recording protection may be understood as that screen recording is not allowed in an ongoing video call process.

The sensitive region protection may be understood as protecting some regions that are not suitable for disclosure in a video call process. A sensitive region may be self-defined, to be specific, the sensitive region is self-defined based on a scenario of the video call between the first terminal device and the second terminal device and a region that needs to be protected. For example, when a user contacts, at home, a property management company to perform remote positioning, a preset sensitive region may be defined as a profile picture of a family member, especially a profile picture of a child. In this way, when the sensitive region protection is enabled, identified profile picture parts are all blurred or some virtual profile pictures are used. For another example, when a user connects a video call, because the user is in a special environment and is unwilling to let the other party know, the user may select a background as the sensitive region. Therefore, a definition of the sensitive region is not excessively limited in embodiments of this application.

Optionally, the first terminal device may further obtain the privacy protection policy from the second terminal device or a network device.

In a possible implementation, the first terminal device may determine, based on the contact frequency between the first terminal device and the second terminal device, the privacy protection policy for performing the video call with the second terminal device.

For example, when the contact frequency between the first terminal device and the second terminal device is low frequency, the first terminal device may determine that the privacy protection policy during the video call with the second terminal device is the sensitive region protection, or the first terminal device may determine to enable the sensitive region protection during the video call with the second terminal device.

For another example, when the contact frequency between the first terminal device and the second terminal device is high frequency, the first terminal device may determine that the privacy protection policy during the video call with the second terminal device is the screen recording protection and/or the screenshot protection, or the first terminal device may determine to enable the screen recording protection and/or the screenshot protection during the video call with the second terminal device.

Whether the contact frequency between the first terminal device and the second terminal device is high frequency or low frequency may be self-defined. For example, the user may choose that when contact frequency in each month is greater than or equal to 10 times, the contact frequency is high frequency; otherwise, the contact frequency is low frequency. When the first terminal device receives a call request from the second terminal device, the first terminal device queries a local call record of the first terminal device, and finds that a quantity of calls between the first terminal device and the second terminal device is eight in a month. In this case, the first terminal device may determine that the contact frequency between the first terminal device and the second terminal device is low frequency, and further determine the privacy protection policy corresponding to the frequency.

In a possible implementation, the first terminal device may determine, based on the location of the first terminal device, the privacy protection policy for performing the video call with the second terminal device.

For example, when the first terminal device positions a kindergarten, the first terminal device may determine that the privacy protection policy for performing the video call with the second terminal device is the sensitive region protection, or the first terminal device may determine to enable the sensitive region protection during the video call with the second terminal device, to be specific, perform the sensitive region protection on an identified child profile picture or kindergarten background. In embodiments of this application, that the first terminal device determines the privacy protection policy based on the location of the first terminal device is not excessively limited.

In a possible implementation, the first terminal device may determine, based on the preference of the user of the first terminal device, the privacy protection policy for performing the video call with the second terminal device.

For example, the first terminal device learns that the screenshot protection is enabled for the user for more than 80% of video calls in a plurality of video call processes. In this case, the first terminal device may determine that the privacy protection policy for the video call with the second terminal device is the screenshot protection, or the first terminal device may determine to enable the screenshot protection during the video call with the second terminal device. For another example, the first terminal device obtains selection information of the user, and determines the privacy protection policy based on the selection information of the user. For example, the user chooses to enable the sensitive region protection. In this case, the first terminal device determines that the privacy protection policy used when the first terminal device is to perform the video call with the second terminal device or the privacy protection policy used in a process of the video call with the second terminal device is the sensitive region protection.

The first terminal device may further determine the privacy protection policy based on at least one of the contact frequency between the first terminal device and the second terminal device, the location of the first terminal device, and the preference of the user of the first user equipment. For example, the first terminal device may determine the privacy protection policy based on the contact frequency between the first terminal device and the second terminal device and the location of the first terminal device. For example, if the contact frequency between the first terminal device and the second terminal device is high frequency, but a location of the first device is a relatively sensitive geographical location in positioning, the first terminal device determines to enable the sensitive region protection when performing the video call with the second terminal device. A solution of determining the privacy protection policy based on at least one of the contact frequency between the first terminal device and the second terminal device, the location of the first terminal device, and the preference of the user of the first user equipment is not excessively limited in embodiments of this application.

The first terminal device may determine, based on the first condition, the privacy protection policy for performing the video call between the first terminal device and the second terminal device, in other words, determine one or more of the screenshot protection, the screen recording protection, and the sensitive region protection. For example, the first terminal device may determine, based on a case in which contact between the first terminal device and the second terminal device is in low frequency, to enable the sensitive region protection, the screenshot protection, and the like. A variation and a combination of any one of the foregoing solutions fall within the protection scope of embodiments of this application, and are not enumerated herein. That the first terminal device determines the privacy protection policy may be as follows: The first terminal device determines the privacy protection policy used when the first terminal device is to perform the video call with the second terminal device, that is, the first terminal device is in a call phase, and the first terminal device and the second terminal device are not connected. Alternatively, the first terminal device may determine the privacy protection policy used when the first terminal device performs the video call with the second terminal device, that is, the first terminal device and the second terminal device are already connected, and are performing the video call in real time.

Optionally, the first terminal device receives subscription information from a user data server, where the subscription information includes information about the privacy protection policy to which the first terminal device subscribes.

Optionally, the user data server includes but is not limited to an HSS and a UDM.

Specifically, the first terminal device receives the subscription information from the user data server. The subscription information may be that the first terminal device subscribes to at least one of the following: the screenshot protection, the screen recording protection, and the sensitive region protection.

In a possible implementation, the first terminal device may further determine, based on the subscription information and the first condition, the privacy protection policy for performing the video call with the second terminal device. For example, the first terminal device may preliminarily determine, based on the first condition, that the privacy protection policy is the screenshot protection and the screen recording protection. However, because the first terminal device subscribes to only a service of the screenshot protection, the first terminal device determines that the privacy protection policy for performing the video call with the second terminal device is the screenshot protection.

S220: The first terminal device executes the privacy protection policy for the video call.

The privacy protection policy in embodiments of this application includes one or more of the screenshot protection, the screen recording protection, and the sensitive region protection. The following separately describes the screenshot protection, the screen recording protection, and the sensitive region protection performed by the first terminal device on the video call. It is to be noted that, first, a method for performing screen recording protection by the first terminal device is similar to a method for performing screenshot protection by the first terminal device. The following describes in detail the method for performing screenshot protection by the first terminal device. For the method for performing screen recording protection by the first terminal device, refer to related descriptions of performing screenshot protection by the first terminal device, and some simple adaptation may be required. Second, the following separately describes the method for performing screenshot protection by the first terminal device and sensitive region protection by the first terminal device. When the first terminal device performs a plurality of screenshot protection, screen recording protection, and sensitive region protection, the following descriptions may also be combined. For brevity, details are not described in this application.

In a possible implementation, the first terminal device performs screenshot protection on the video call.

Specifically, the first terminal device determines, according to the preset principle or based on the first condition, that the privacy protection policy for performing the video call between the first terminal device and the second terminal device is the screenshot protection. When the first terminal device receives first information from the second terminal device, where the first information indicates that a screenshot operation is performed on the second terminal device, because the first terminal device enables the screenshot protection, the first terminal device sends second information to the second terminal device, where the second information indicates that the first terminal device prohibits the second terminal device from performing the screenshot operation. A first interface may appear on an interface of the second terminal device, and the first interface is for prompting the second terminal device that the first terminal device does not allow screenshot during the video call.

Optionally, the first information may be session initiation protocol (session initiation protocol, SIP) information (information, INFO).

Optionally, the second information may be SIP INFO.

Optionally, the first terminal device receives the first information from the second terminal device, where the first information is for requesting to perform the screenshot operation and/or a screen recording operation on content of the video call.

Optionally, the first terminal device receives the first information from the second terminal device, where the first information notifies the first terminal device that the second terminal device performs the screenshot operation and/or a screen recording operation on content of the video call.

In a possible implementation, the first terminal device performs sensitive region protection on the video call.

Specifically, if the first terminal device determines, according to the preset principle or based on the first condition, that the privacy protection policy for performing the video call between the first terminal device and the second terminal device is the sensitive region protection, the first terminal device enables the sensitive region protection, that is, executes the privacy protection policy for a video frame that is in a video stream. For example, the first terminal device obtains information about the sensitive region, where the information about the sensitive region may be preconfigured, or the first terminal device may obtain the information about the sensitive region after the first terminal device selects the sensitive region. Then, the first terminal device identifies, based on the information about the sensitive region, the video frame that corresponds to the sensitive region and that is in the video stream, and preprocesses the identified video frame, where the preprocessing includes but is not limited to fuzzy processing and/or model replacement. The first terminal device sends, to the second terminal device, the video stream for which the privacy protection policy is executed.

The video stream sent by the first terminal device to the second terminal device may be understood as follows: When the first terminal device performs the video call with the second terminal device, an image of the video call is sent to the second terminal device in a form of the video stream. More specifically, the first terminal device sends a media stream to the second terminal device, where the media stream includes the video stream and an audio stream, a video frame in the video stream is an image during the video call, and an audio frame in the audio stream is a sound during the video call.

The foregoing descriptions are provided by using the first terminal device as the called device. The first terminal device is alternatively used as the calling device. When the first terminal device is the calling device, a specific implementation process of the first terminal device is similar to that in the foregoing method. For brevity, details are not described in embodiments of this application.

In the foregoing solution, the first terminal device determines the privacy protection policy for performing the video call between the first terminal device and the second terminal device, and executes the privacy protection policy for the video call, so that concerns of the user about privacy leakage in the video call process can be alleviated, thereby improving self-confidence of the user, and facilitating application of the video call in a 2B scenario.

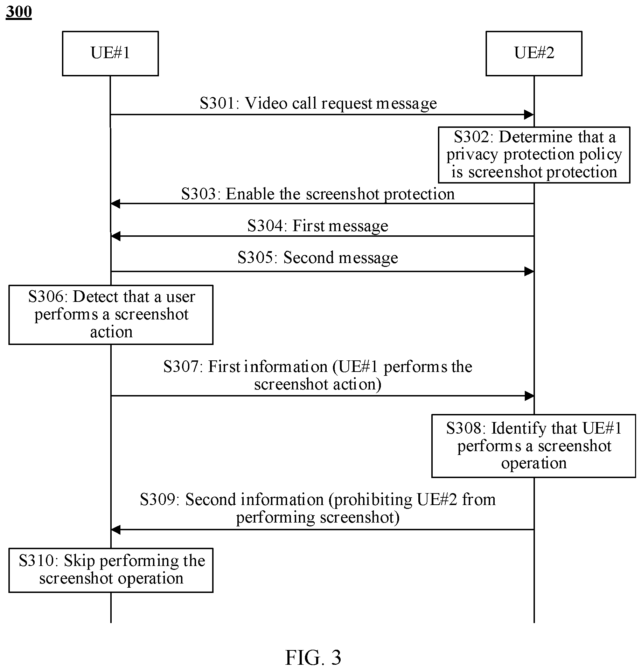

FIG. 3 is a schematic diagram of a video call processing method 300 according to this application. The method 300 is a specific implementation process of the method 200. The following describes the video call processing method 300 provided in embodiments of this application with reference to FIG. 3. An example in which a second terminal device is UE#1, UE#1 corresponds to CSCF#1, a first terminal device is UE#2, and UE#2 corresponds to CSCF#2 is used for description. The method 300 includes the following steps.

S301: LTE#1 sends a video call request message to LTE#2.

To describe in detail the video call processing method provided in this application, some procedures are simplified, but this does not mean that the procedures are not performed in this application. For example, after initiating the video call request message, UE#1 first sends the video call request message to CSCF#1, CSCF#1 sends the video call request message to CSCF#2 after receiving the message, and CSCF#2 sends the message to UE#2. In FIG. 3, a specific implementation process is not illustrated one by one.

For example, the video call request message includes but is not limited to a session initiation protocol call invite (SIP invite) message.

S302: UE#2 determines that a privacy protection policy is screenshot protection.

For example, after receiving the video call request message, UE#2 determines the privacy protection policy, and UE#2 may determine the privacy protection policy based on a first condition. For example, the privacy protection policy is determined based on information such as contact frequency with LTE#1 and a positioning location of LTE#2. In this embodiment of this application, the contact frequency is used as an example for description.

For example, UE#2 may determine, by reading a local call record of UE#2, that the contact frequency between UE#2 and UE#1 is high frequency. It is to be noted that whether the contact frequency is high frequency or low frequency may be determined by a user of LTE#2. For example, the user defines the following cases: If average contact frequency in a month exceeds five times, contact frequency is high frequency; otherwise, contact frequency is low frequency. In addition to high frequency and low frequency, the contact frequency may further be defined with another frequency, for example, intermediate frequency and medium-high frequency. In addition, the privacy protection policy corresponding to the frequency may also be user-defined. For example, a privacy protection policy corresponding to high frequency is the screenshot protection, and a privacy protection policy corresponding to low frequency is sensitive region protection; or a privacy protection policy corresponding to high frequency is sensitive region protection, and a privacy protection policy corresponding to low frequency is the screenshot protection. This is not limited in embodiments of this application. In this embodiment of this application, an example in which the privacy protection policy corresponding to high frequency is the screenshot protection, and the privacy protection policy corresponding to low frequency is the sensitive region protection is used for description.

When UE#2 determines that the contact frequency between UE#2 and UE#1 is high frequency, LTE#2 may determine that the privacy protection policy is the screenshot protection.

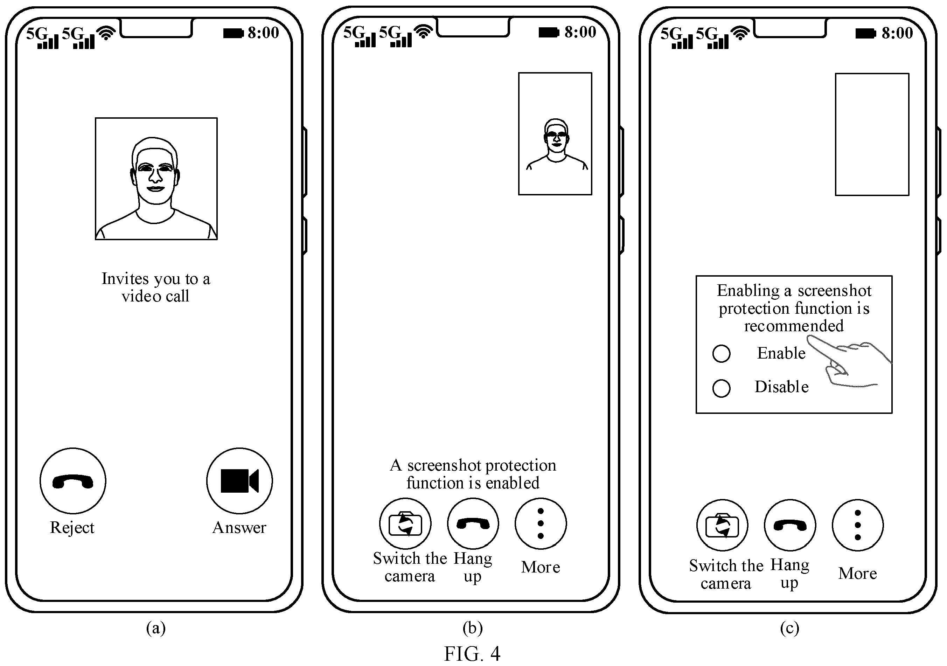

For example, as shown in (a) in FIG. 4, LTE#2 receives a video call. Optionally, LTE#2 may determine, based on the contact frequency, whether to enable the screenshot protection. If the contact frequency between UE#1 and UE#2 is high frequency, UE#2 may determine to enable the screenshot protection. In a possible implementation, a prompt similar to "A screenshot protection function is enabled" may be displayed on a call interface of LTE#2, for example, as shown in (b) in FIG. 4. In another possible implementation, UE#2 further displays a second image, where the second image is used by the user of LTE#2 to choose whether to enable a screenshot protection function. For example, as shown in (c) in FIG. 4, the user is prompted that "Enabling the screenshot protection function is recommended", and the user may choose, based on the prompt or a preference, whether to enable the screenshot protection function. If choosing to enable the screenshot protection function, the user taps "Enable". If choosing to disable the screenshot protection function, the user taps "Disable". When LTE#2 determines that screenshot protection does not need to be enabled, LTE#2 may further prompt the user that "Enabling the screenshot protection function is not recommended". This is not excessively limited in embodiments of this application.

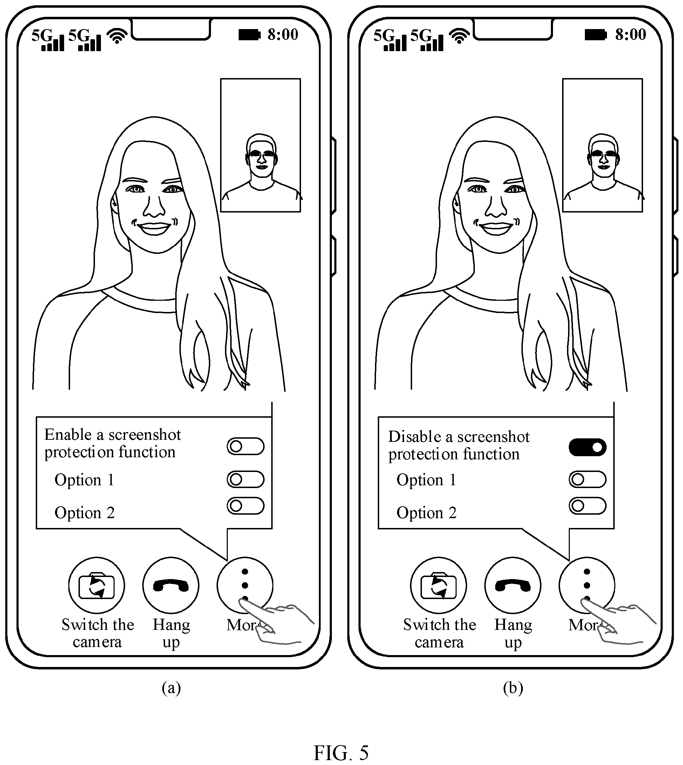

As mentioned in the foregoing solution, the user may also be prompted, in a process of a connected video call, whether to enable the screenshot protection function as recommended by LTE#2. For example, if UE#2 detects that a location of LTE#2 is switched from a scenario in which screenshot cannot be performed to a scenario in which screenshot can be performed, UE#2 may prompt the user that the screenshot protection function may be enabled in the environment, or may directly display the second image for the user to choose whether to enable the screenshot protection function. When UE#2 prompts the user that the screenshot protection function may be enabled in the environment, in a possible implementation, LTE#2 may select to enable the screenshot protection function in a "More" option, for example, in (a) in FIG. 5. Alternatively, when UE#2 detects that the location of UE#2 is switched from a scenario in which screenshot can be performed to a scenario in which screenshot cannot be performed, UE#2 may prompt the user that enabling the screenshot protection function in the environment is not recommended, or may directly display the second image for the user to choose whether to disable the screenshot protection function. When UE#2 prompts the user that enabling the screenshot protection function in the environment is not recommended, in a possible implementation, the user may choose to disable the screenshot protection function in the "More" option, for example, in (b) in FIG. 5.

It is to be noted that, for ease of understanding, in this embodiment of this application, how UE#2 recommends whether to enable the screenshot protection function is described as an example, but this does not constitute any limitation on embodiments of this application. Alternatively, the user may be recommended for enabling or disabling the screenshot protection function in another form. This is not limited in embodiments of this application.

If LTE#2 determines that the privacy protection policy is to enable the screenshot protection, the following steps are performed.

S303: LTE#1 receives, from LTE#2, information indicating that the screenshot protection is enabled.

For example, UE#2 sends an alerting message to UE#1. For example, the alerting message may be a 180 message, in other words, the 180 message carries the information indicating the screenshot protection is enabled.

It is to be noted that, in FIG. 3, some procedures are simplified, but this does not mean that the procedures are not performed in this application. For example, UE#2 first sends the 180 message to CSCF#1, CSCF#1 sends the message to CSCF#2 after receiving the message, and CSCF#2 sends the message to UE#1. However, for brevity, a specific implementation process is not shown one by one.

S304: LTE#1 receives a first message from LTE#2.

S305: LTE#2 receives a second message from LTE#1.

Specifically, when the user of LTE#2 accepts a video invitation or the user of LTE#2 presses a button similar to "answer", UE#2 may send the first message to UE#1, where the first message may be, for example, a session success (200) message, namely, a formal response to the video call request message in S301. After receiving the first message, LTE#1 may send the second message to LTE#2, where the second message is a response to the first message, in other words, used as a response to reception of the first message. The first message may be an acknowledge (ACK) message.

S306: LTE#1 detects that a user performs a screenshot action.

S307: LTE#1 sends first information to LTE#2, where the first information is for notifying UE#2 that LTE#1 performs the screenshot action.

For example, when detecting that the user performs the screenshot action, LTE#1 notifies UE#2 of such a behavior, in other words, sends the first information to UE#2, where the first information indicates that UE#1 performs the screenshot action.

The first information indicating that UE#1 performs the screenshot action may directly include information indicating that UE#1 performs the screenshot action, or a function of the indication information or information carried in the indication information may directly or indirectly represent/identify/inform/notify/request LTE#2 that LTE#1 performs the screenshot action. As long as the first information can indicate that UE#1 performs the screenshot action, the first information falls within the protection scope of embodiments of this application. This is not excessively limited herein.

The first information may be exchanged through SIP INFO.

S308: LTE#2 identifies that UE#1 performs a screenshot operation.

S309: LTE#2 sends second information to LTE#1, where the second information indicates that LTE#2 prohibits LTE#1 from performing the screenshot operation.

Specifically, after receiving the first information, UE#2 may identify that UE#1 performs the screenshot operation, or determine that LTE#1 performs the screenshot operation. Because it is determined that the privacy protection policy is to enable the screenshot protection in step S302, after receiving the first information, UE#2 determines that UE#1 performs the screenshot operation, and sends the second information to UE# 1. The second information indicates that LTE#2 prohibits LTE#1 from performing the screenshot operation. In other words, the second information indicates that performing screenshot by LTE#1 is forbidden/not allowed/unauthorized/prohibited by UE#2.

The second information indicating that LTE#1 cannot perform the screenshot operation may directly include information indicating that UE#2 prohibits UE#1 from performing the screenshot operation, or a function of the indication information or information carried in the indication information may directly or indirectly represent/identify/inform/notify UE#1 that the screenshot operation cannot be performed. As long as the second information can indicate that LTE#2 prohibits LTE#1 from performing the screenshot operation, the second information falls within the protection scope of embodiments of this application. This is not excessively limited herein.

The second information may be exchanged through SIP INFO.

S310: LTE#1 does not perform the screenshot operation.

For example, LTE#1 receives the second information from LTE#2, where the second information indicates that LTE#2 prohibits LTE#1 from performing the screenshot operation. Correspondingly, UE#1 does not perform the screenshot operation. This may be specifically represented as follows: The interface of the video call displays a first image, and the first image is for prompting the user of LTE#1 that the other party does not allow a screenshot during the video call.

It is to be noted that the foregoing solution is described from the perspective of using the privacy protection policy by the called device, and may be further applied to the calling device, or may be applied to both the called device and the calling device. For a specific implementation, refer to related descriptions of using the screenshot protection by LTE#2. Some simple adaptation may be required, but this also falls within the protection scope of embodiments of this application.

In the foregoing solution, UE#2 determines the privacy protection policy, and sends the privacy protection policy to UE#1, so that the other party can be prevented from performing the screenshot operation without permission, thereby avoiding unnecessary embarrassment, protecting privacy of the video call users, and improving user confidence.

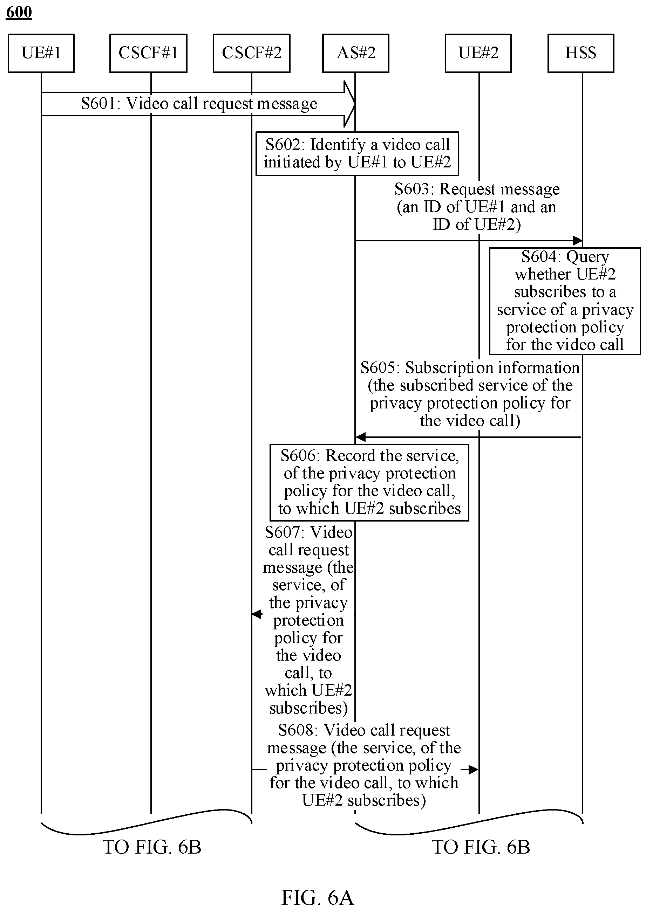

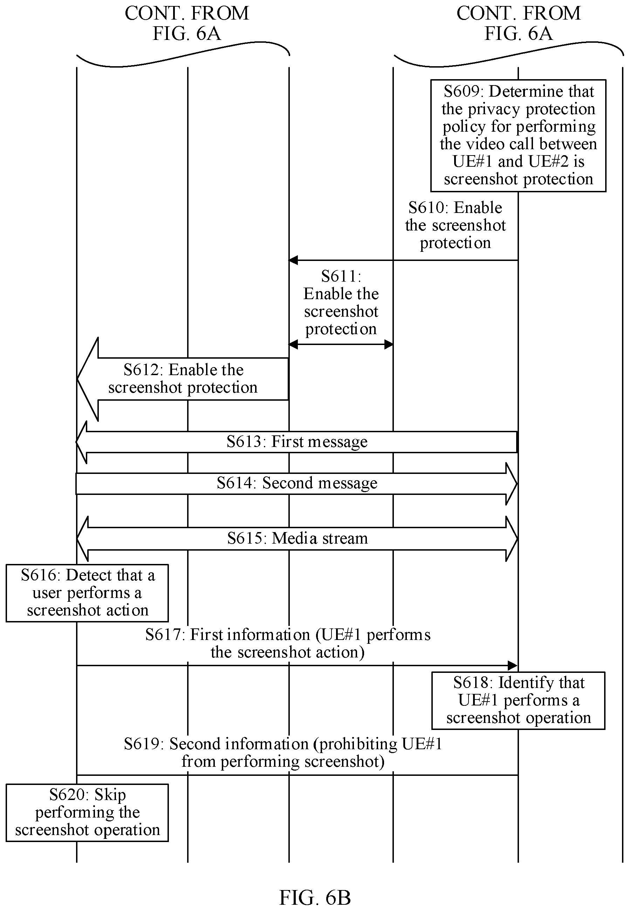

FIG. 6A and FIG. 6B are a schematic diagram of another video call processing method 600 according to an embodiment of this application. The method 600 is another specific implementation process of the method 200. The following describes the video call processing method 600 provided in embodiments of this application with reference to FIG. 6A and FIG. 6B. An example in which a second terminal device is LTE#1, LTE#1 corresponds to CSCF#1, a first terminal device is LTE#2, and LTE#2 corresponds to CSCF#2, an HSS, and AS#2 is used for description. The method 600 includes the following steps.

S601: LTE#1 sends a video call request message to AS#2.

Correspondingly, in step S601, AS#2 receives the video call request message from UE#1.

For example, the video call request message includes but is not limited to a session initiation protocol call invite (SIP invite) message.

In embodiments of this application, some procedures are simplified, but this does not mean that the procedures are not performed in this application. For example, after initiating the video call request message, UE#1 sends the video call request message to CSCF#1, CSCF#1 sends the video call request message to CSCF#2 after receiving the message, and CSCF#2 sends the message to AS#2. This is not described in detail in embodiments of this application.

S602: AS#2 identifies a video call initiated by LTE#1 to LTE#2.

Specifically, after receiving the video call request message from UE#1, AS#2 identifies that the call request message is the video call initiated by UE#1 to UE#2. After identifying the message, AS#2 performs step S603: AS#2 sends a request message to the HSS, where the request message includes identifiers of UE#1 and UE#2, where the identifier is, for example, an identity (identity, ID). The request message is for requesting the HSS to query whether UE#2 subscribes to a service of a privacy protection policy for a video call.

S604: The HSS queries whether UE#2 subscribes to the service of the privacy protection policy for the video call.

Optionally, that UE#2 subscribes to the service of the privacy protection policy for the video call may be as follows: LTE#2 subscribes to one or more of a service of screenshot protection, a service of screen recording protection, and a service of sensitive region protection for the video call.

S605: The HSS sends subscription information to AS#2, where the subscription information is the service, of the privacy protection policy for the video call, to which LTE#2 subscribes.

For example, after receiving the request message, the HSS queries whether UE#2 subscribes to the service of the privacy protection policy for the video call. If the HSS finds that UE#2 subscribes to the service of the privacy protection policy for the video call, the HSS sends the subscription information to AS#2. The subscription information may be a response to the request message in step S603.

The subscription information may include one or more of the service of the screenshot protection, the service of the screen recording protection, and the service of the sensitive region protection, for the video call, to which UE#2 subscribes.

S606: AS#2 records the service, of the privacy protection policy for the video call, to which UE#2 subscribes.

The subscription information received by AS#2 from the HSS includes the service, of the privacy protection policy for the video call, to which UE#2 subscribes, and AS#2 records the service of the privacy protection policy, so as to determine which privacy protection policy is to be used based on selection of a user in a current call.

S607: AS#2 sends the video call request message to CSCF#2, where the request message carries information about the service, of the privacy protection policy for the video call, to which UE#2 subscribes.

S608: CSCF#2 sends the video call request message to UE#2, where the request message carries the information about the service, of the privacy protection policy for the video call, to which UE#2 subscribes.

Specifically, AS#2 sends the video call request message to CSCF#2. After receiving the video call request message, CSCF#2 sends the video call request message to UE#2, where the video call request message carries the information about the service, of the privacy protection policy for the video call, to which LTE#2 subscribes. This may also be understood as that LTE#2 receives the subscription information from the HSS.

The video call request message includes but is not limited to a session initiation protocol call invite (SIP invite) message.

S609: LTE#2 determines that the privacy protection policy for performing the video call between UE#1 and UE#2 is the screenshot protection.

Specifically, in step S609, UE#2 may determine, based on a first condition and the subscription information, the privacy protection policy for performing the video call between LTE#2 and LTE#1. For example, LTE#2 may determine, by reading a local call record, that contact frequency between UE#2 and UE#1 is high frequency, and may preliminarily determine that UE#2 may enable a screenshot protection function and a screen recording protection function. If the subscription information received by UE#2 in step S608 is only information about the subscribed service of the screenshot protection, LTE#2 finally determines to enable the screenshot protection function when UE#2 performs the video call with UE#1. If the subscription information received by LTE#2 in step S608 includes information about the subscribed service of the screenshot protection and information about the subscribed service of the screen recording protection, LTE#2 finally determines to enable the screenshot protection function and the screen recording protection function when UE#2 performs the video call with UE#1. If the subscription information received by LTE#2 in step S608 is only information about the subscribed service of the sensitive region protection, UE#2 finally determines not to enable the screenshot protection function and the screen recording protection function. In embodiments of this application, UE#2 determines to enable the screenshot protection function when UE#2 performs the video call with UE#1. In this case, there are the following steps.

S610: LTE#2 sends, to CSCF#2, information indicating that the screenshot protection is enabled.

S611: AS#2 exchanges, with CSCF#2, the information indicating that the screenshot protection is enabled.

S612: CSCF#2 sends, to LTE#1, the information indicating that the screenshot protection is enabled.

Specifically, after receiving the video call request message, UE#2 may determine, based on subscription information of UE#1 and the subscription information of UE#2 and the contact frequency between UE#1 and UE#2, to enable the screenshot protection when UE#2 performs the video call with LTE#1, and LTE#2 sends, to CSCF#2, the information indicating that UE#2 enables the screenshot protection. After receiving the information indicating that the screenshot protection is enabled, CSCF#2 may exchange the information with AS#2, and may send the information to UE#1.

It is to be noted that step S612 is an optional step, to be specific, after receiving the information indicating that UE#2 enables the screenshot protection, CSCF#2 may not send the message to UE#1.

S613: LTE#2 sends a first message to LTE#1.

S614: LTE#1 sends a second message to LTE#2.

For a specific implementation process, refer to S304 and S305. For brevity, details are not described again.

It is to be noted that, in FIG. 6A and FIG. 6B, some procedures are simplified, but this does not mean that the procedures are not performed in this application. For example, UE#2 first sends the first message to CSCF#1, CSCF#1 sends the message to CSCF#2 after receiving the message, and CSCF#2 sends the message to UE#1. However, for brevity, a specific implementation process is not shown one by one.

S615: LTE#1 and UE#2 perform media stream interaction.

Specifically, after UE#2 is connected to the video call, media stream interaction exists between UE#1 and UE#2, and a media stream includes but is not limited to a video stream and an audio stream.

S616: LTE#1 detects that the user performs a screenshot action.

S617: LTE#1 sends first information to LTE#2, where the first information is for notifying UE#2 that LTE#1 performs the screenshot action.

S618: LTE#2 identifies that UE#1 performs a screenshot operation.

S619: LTE#2 sends second information to LTE#1, where the second information indicates that LTE#2 prohibits LTE#1 from performing the screenshot operation.

S620: UE#1 does not perform the screenshot operation.

For a specific implementation process of step S616 to step S620, refer to step S306 to step S310. For brevity, details are not described again.

In the foregoing solution, UE#2 determines the privacy protection policy based on the subscription information and the first condition, and executes the privacy protection policy, so that the other party can be prevented from performing the screenshot operation without permission, thereby avoiding unnecessary embarrassment, protecting privacy of the video call users, and improving user confidence.

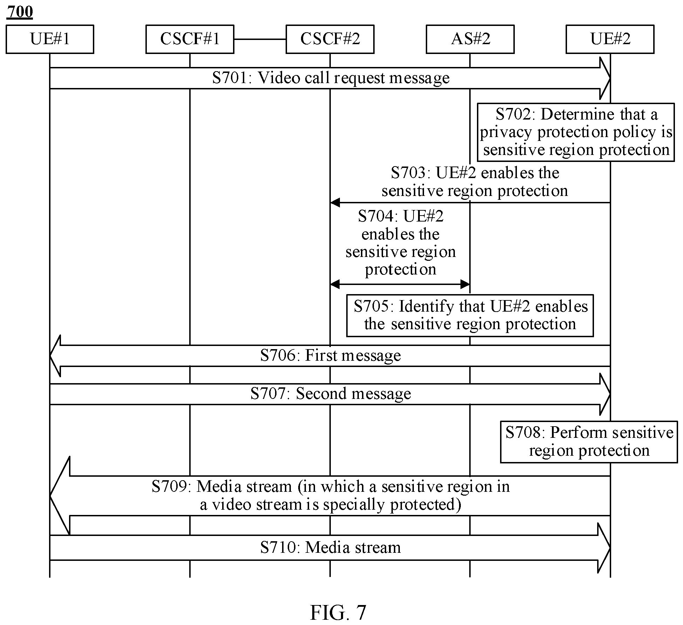

FIG. 7 is a schematic diagram of another video call processing method 700 according to an embodiment of this application. The method 700 is another specific implementation process of the method 200. The following describes the video call processing method 700 provided in embodiments of this application with reference to FIG. 7. An example in which a second terminal device is UE#1, UE#1 corresponds to CSCF#1, a first terminal device is UE#2, and UE#2 corresponds to CSCF#2 is used for description. The method 700 includes the following steps.

S701: LTE#1 sends a video call request message to LTE#2.

For a specific implementation process, refer to 301. For brevity, details are not described again.

S702: LTE#2 determines that a privacy protection policy is sensitive region protection.

For example, after receiving the video call request message, UE#2 determines the privacy protection policy, and UE#2 may determine the privacy protection policy based on a first condition. For example, the privacy protection policy is determined based on information such as contact frequency with LTE#1 and a positioning location of LTE#2. In this embodiment of this application, the contact frequency is used as an example for description.

For example, UE#2 may determine, by reading a local call record of UE#2, that the contact frequency between UE#2 and UE#1 is low frequency. It is to be noted that whether the contact frequency is high frequency or low frequency may be determined by a user of LTE#2. For example, the user defines the following cases: If average contact frequency in a month exceeds five times, contact frequency is high frequency; otherwise, contact frequency is low frequency. In addition to high frequency and low frequency, the contact frequency may further be defined with another frequency, for example, intermediate frequency and medium-high frequency. In addition, the privacy protection policy corresponding to the frequency may also be user-defined. For example, a privacy protection policy corresponding to high frequency is screenshot protection, and a privacy protection policy corresponding to low frequency is sensitive region protection; or a privacy protection policy corresponding to high frequency is sensitive region protection, and a privacy protection policy corresponding to low frequency is screenshot protection. This is not limited in embodiments of this application. In this embodiment of this application, an example in which the privacy protection policy corresponding to high frequency is the screenshot protection, and the privacy protection policy corresponding to low frequency is the sensitive region protection is used for description.

When LTE#2 determines that the contact frequency between LTE#2 and LTE#1 is low frequency, LTE#2 may determine that the privacy protection policy is the sensitive region protection.

For example, LTE#2 receives a video call. Optionally, LTE#2 may determine, based on the contact frequency, whether to enable the sensitive region protection. If the contact frequency between LTE#1 and LTE#2 is low frequency, LTE#2 may determine to enable the sensitive region protection. In a possible implementation, a prompt similar to "A sensitive region protection function is enabled" may be displayed on a call interface of UE#2. In another possible implementation, UE#2 further displays a second image, where the second image is used by the user of UE#2 to choose whether to enable a sensitive region protection function. For example, the user is prompted that "Enabling the sensitive region protection function is recommended", and the user may choose, based on the prompt or a preference, whether to enable the sensitive region protection function. When UE#2 determines that sensitive region protection does not need to be enabled, LTE#2 may further prompt the user that "Enabling the sensitive region protection function is not recommended". This is not excessively limited in embodiments of this application.

For another example, when the user of UE#2 is in an environment with relatively high confidentiality or in a scenario in which it is inappropriate to answer a call, but has to enable a video call, the user may select to enable the sensitive region protection function.

In a possible implementation, the user may also select, in a process of a connected video call, whether to enable the sensitive region protection function as recommended by LTE#2. For example, if a call background of the user is switched from a scenario in which the video call background can be displayed to a scenario in which it is inappropriate to display the video call background, UE#2 may prompt the user that the sensitive region protection function may be enabled in the environment, or may directly display a second image for the user to select whether to enable the sensitive region protection function. When UE#2 prompts the user that the sensitive region protection function may be enabled in the environment, in a possible implementation, the user may select to enable the sensitive region protection function in a "More" option. Alternatively, when a call background of the user is switched from a scenario in which it is inappropriate to display the video call background to a scenario in which the video call background can be displayed, UE#2 may prompt the user that enabling the sensitive region protection function in the environment is not recommended, or may directly display a second image for the user to select whether to disable the sensitive region protection function. When UE#2 prompts the user that enabling the sensitive region protection function in the environment is not recommended, in a possible implementation, the user may choose to disable the sensitive region protection function in a "More" option.

In a possible implementation, when the video call has been connected, the user may choose to perform sensitive region protection on a region of an image based on a preference of the user. For example, options such as "Enable a profile picture protection function" and "Enable a background blurring function" may exist in the "More" option, or options such as " Enable a profile picture protection function" and " Enable a background blurring function" are directly displayed on a main interface of the video call. As long as the sensitive region protection can be performed, any form falls within the protection scope of embodiments of this application, and is not enumerated herein.

It is to be noted that, for ease of understanding, in this embodiment of this application, how UE#2 recommends whether to enable the sensitive region protection function is described as an example, but this does not constitute any limitation on embodiments of this application. LTE#2 may automatically enable the sensitive region protection in some scenarios, for example, in a location of the user positioned by LTE#2 where it is inappropriate to connect a video call. LTE#2 may alternatively recommend the user for enabling or disabling the sensitive region protection function in another form. This is not limited in embodiments of this application.

If UE#2 determines to enable the sensitive region protection, the following steps are performed.

S703: UE#2 sends, to CSCF#2, information indicating that UE#2 enables the sensitive region protection.

S704: CSCF#2 exchanges, with AS#2, the information indicating that UE#2 enables the sensitive region protection.

For example, UE#2 sends an alerting message to CSCF#2. For example, the alerting message may be a 180 message, in other words, the 180 message carries the information indicating that LTE#2 enables the sensitive region protection.

CSCF#2 delivers the message to an AS related to the message. For example, AS#2 is responsible for a service of the sensitive region protection. After completing the service, AS#2 sends the message to CSCF#2. A corresponding procedure is similar to a current procedure, and details are not described in embodiments of this application.

S705: AS#2 identifies that LTE#2 enables the sensitive region protection.

For example, AS#2 receives, from CSCF#2, the information indicating that UE#2 enables the sensitive region protection, in other words, detects/identifies that UE#2 enables the sensitive region protection. In other words, that AS#2 detects that UE#2 determines to enable the sensitive region protection function mean that a network device does not need to determine to execute the privacy protection policy.

S706: LTE#1 receives a first message from LTE#2.

S707: LTE#2 receives a second message from LTE#1.

For a specific implementation process, refer to S304 and S305. For brevity, details are not described again.

S708: LTE#2 performs sensitive region protection.

For example, UE#2 obtains information about a sensitive region. For example, the user of UE#2 defines the sensitive region as a profile picture, and UE#2 may identify a video frame in a video stream or an image in the video stream by using an image recognition technology, and perform sensitive region protection on the identified sensitive region, for example, perform mosaic or model replacement on the profile picture.

In this application, the sensitive region may be self-defined, and the sensitive region is defined based on actual video call scenarios of users at both parties and a region that needs to be protected. For example, when the user contacts, at home, a property management company to perform remote positioning, a preset sensitive region may be a profile picture of a family member, especially a profile picture of a child. When performing sensitive region protection, a terminal identifies the profile picture, and performs fuzzy processing on the profile picture, for example, by using mosaic or some virtual profile pictures for replacement. For another example, when the video call is connected, if the user does not want to show an environment in which the user is located to the other party, a background may be selected as the sensitive region. A definition of the sensitive region is not excessively limited in embodiments of this application.

S709: UE#2 sends a media stream to UE#1, where a video stream in the media stream is the video stream for which the sensitive region protection is performed.

Correspondingly, in step S709, LTE#1 receives, from LTE#2, the media stream for which LTE#2 performs sensitive region protection.

S710: LTE#1 sends the media stream to LTE#2.

Correspondingly, in step S710, LTE#2 receives the media stream from LTE#1.

The media stream includes but is not limited to an audio stream and the video stream.

For example, UE#2 determines that the privacy protection policy of UE#2 is to enable the sensitive region protection. In this case, UE#2 protects the detected sensitive region. After the video call is connected, the video frame, corresponding to the sensitive region, in the video stream sent by LTE#2 to LTE#1 is specially protected, where the special protection may be understood as performing blur processing, virtual profile picture replacement, and the like.

If UE#1 does not perform sensitive region protection, the media stream in step S710 is a media stream that is not processed. More specifically, the video stream in the media stream is normal and is not processed.

It is to be noted that the foregoing solution is described from the perspective of using the privacy protection policy by a called device, and may be further applied to a calling device, or may be applied to both the called device and the calling device. For a specific implementation, refer to related descriptions of using the sensitive region protection by the called device. Some simple adaptation may be required, but this also falls within the protection scope of embodiments of this application. If UE#1 also performs sensitive region protection, in step S710, a video frame, corresponding to a sensitive region, in a video stream in the media stream sent by LTE#2 to LTE#1 is specially protected.

It is to be noted that both a calling device and a called device may use the sensitive region protection function. When both the calling device and the called device use the sensitive region protection function, sensitive regions of the calling device and the called device may be the same or may be different. To be specific, the sensitive region defined by the calling device is a background, and the sensitive region defined by the called UE is a profile picture, or may be a background. This is not excessively limited in embodiments of this application.

In the foregoing solution, UE#2 determines that the privacy protection policy is the sensitive region protection, and executes the privacy protection policy, so as to avoid unnecessary embarrassment caused by reasons such as unfamiliarity of both parties or inappropriate call time and place when UE#2 performs the video call with LTE#1, thereby protecting privacy of the video call users, and improving user confidence.

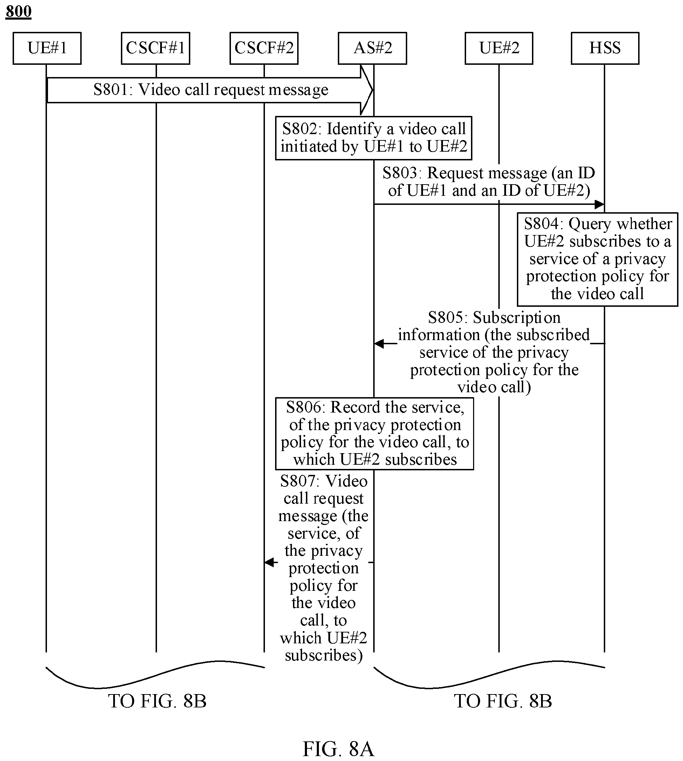

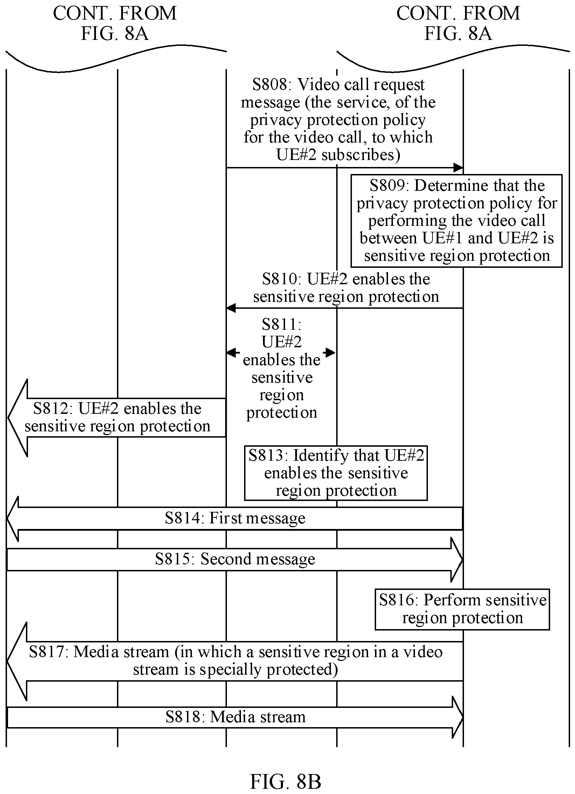

FIG. 8A and FIG. 8B are a schematic diagram of another video call processing method 800 according to an embodiment of this application. The method 800 is another specific implementation process of the method 200. The following describes the video call processing method 800 provided in embodiments of this application with reference to FIG. 8A and FIG. 8B. An example in which a second terminal device is LTE#1, LTE#1 corresponds to CSCF#1, a first terminal device is LTE#2, and LTE#2 corresponds to CSCF#2, an HSS, and AS#2 is used for description. The method 800 includes the following steps.

S801: LTE#1 sends a video call request message to AS#2.

S802: AS#2 identifies a video call initiated by LTE#1 to LTE#2.

S803: AS#2 sends a request message to the HSS, where the request message includes an ID of UE#1 and an ID of UE#2.

S804: The HSS queries whether LTE#2 subscribes to a service of a privacy protection policy for a video call.

S805: The HSS sends subscription information to AS#2, where the subscription information is the service, of the privacy protection policy for the video call, to which LTE#2 subscribes.

S806: AS#2 records the service, of the privacy protection policy for the video call, to which UE#2 subscribes.

S807: AS#2 sends the video call request message to CSCF#2, where the request message carries information about the service, of the privacy protection policy for the video call, to which UE#2 subscribes.

S808: CSCF#2 sends the video call request message to UE#2, where the request message carries the information about the service, of the privacy protection policy for the video call, to which UE#2 subscribes.

For a specific implementation process of step S801 to step S808, refer to step S601 to step S608. For brevity, details are not described again.

S809: LTE#2 determines that the privacy protection policy for performing the video call between UE#1 and UE#2 is sensitive region protection.

Specifically, in step S809, UE#2 may determine, based on a first condition and the subscription information, the privacy protection policy for performing the video call between LTE#2 and LTE#1. For example, LTE#2 may determine, by reading a local call record, that contact frequency between LTE#2 and LTE#1 is low frequency. Besides, if the subscription information received by UE#2 in step S808 includes information about a subscribed service of the sensitive region protection, UE#2 may determine to enable a sensitive region protection function when UE#2 performs the video call with UE#1. If the subscription information received by UE#2 in step S808 does not include information about a subscribed service of the sensitive region protection, UE#2 finally determines not to enable a sensitive region protection function. In embodiments of this application, UE#2 determines to enable the sensitive region protection function when UE#2 performs the video call with UE#1. In this case, there are the following steps.

S810: UE#2 sends, to CSCF#2, information indicating that UE#2 enables the sensitive region protection.

S811: AS#2 exchanges, with CSCF#2, the information indicating that UE#2 enables the sensitive region protection.

S812: CSCF#2 sends, to UE#1, the information indicating that UE#2 enables the sensitive region protection.

Specifically, after receiving the video call request message, UE#2 may determine, based on information about UE#1 and UE#2, the contact frequency between UE#1 and UE#2, and the like, to enable the sensitive region protection when LTE#2 performs the video call with LTE#1, and LTE#2 sends, to CSCF#2, the information indicating that LTE#2 enables the sensitive region protection. After receiving the information indicating that sensitive region protection is enabled, CSCF#2 may exchange the information with AS#2, and may send the information to LTE#1.

It is to be noted that step S812 is an optional step, to be specific, after receiving the information indicating that UE#2 enables the sensitive region protection, CSCF#2 may not send the message to LTE#1.

S813: AS#2 identifies that LTE#2 enables the sensitive region protection.

S814: LTE#1 receives a first message from LTE#2.

S815: LTE#2 receives a second message from LTE#1.

For a specific implementation process of step S813 and step S814, refer to step S613 and step S614. For brevity, details are not described again.

S816: LTE#2 performs sensitive region protection.

S817: UE#2 sends a media stream to UE#1, where a video stream in the media stream is a video stream for which the sensitive region protection is performed.

S818: LTE#1 sends the media stream to LTE#2.

For a specific implementation process of step S813 to step S818, refer to step S705 to step S710. For brevity, details are not described again.

In the foregoing solution, LTE#2 determines, based on the subscription information and the first condition, that the privacy protection policy is the sensitive region protection, and executes the privacy protection policy, so as to avoid unnecessary embarrassment caused by reasons such as unfamiliarity of both parties or inappropriate call time and place when LTE#2 performs the video call with UE# 1, thereby protecting privacy of the video call users, and improving user confidence.

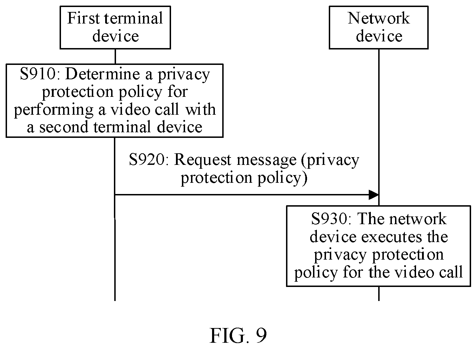

FIG. 9 is a schematic diagram of a video call processing method 900 according to an embodiment of this application. The method 900 includes the following steps.

S910: A first terminal device determines a privacy protection policy for performing a video call with a second terminal device.

The privacy protection policy is for protecting an interface of the video call, and the privacy protection policy includes sensitive region protection. The first terminal device may act as a calling device or a called device. For example, when the first terminal device acts as the calling device, the second terminal device is the called device; or when the first terminal device is the called device, the second terminal device is the calling device.

Optionally, the first terminal device determines the privacy protection policy for performing the video call with the second terminal device, and the determining may be performed according to a specific principle (preset principle), which is referred to as a first condition below. The first condition includes at least one of the following: contact frequency between the first terminal device and the second terminal device, a location of the first terminal device, and a preference of a user.

In addition to the foregoing mentioned content, the first condition may alternatively be defined by the user of the first terminal device. For example, the user of the first terminal device classifies contacts in an address book of the first terminal device, and sets a privacy protection policy of each category for the category. As long as the first terminal device can determine the privacy protection policy based on the first condition, the first condition falls within the protection scope of embodiments of this application, and the first condition is not exhaustively listed in this application.

The sensitive region protection may be understood as protecting some regions that are not suitable for disclosure in a video call process. A sensitive region may be self-defined, to be specific, the sensitive region is self-defined based on a scenario of the video call between the first terminal device and the second terminal device and a region that needs to be protected. For example, when a user contacts, at home, a property management company to perform remote positioning, a preset sensitive region may be defined as a profile picture of a family member, especially a profile picture of a child. In this way, when the sensitive region protection is enabled, identified profile picture parts are all blurred or some virtual profile pictures are used. For another example, when a user connects a video call, because the user is in a special environment and is unwilling to let the other party know, the user may select a background as the sensitive region. Therefore, a definition of the sensitive region is not excessively limited in embodiments of this application.

In a possible implementation, the first terminal device may determine, based on the contact frequency between the first terminal device and the second terminal device, the privacy protection policy for performing the video call with the second terminal device.

For example, when the contact frequency between the first terminal device and the second terminal device is low frequency, the first terminal device may determine that the privacy protection policy during the video call with the second terminal device is the sensitive region protection, or the first terminal device may determine to enable the sensitive region protection during the video call with the second terminal device.

Whether the contact frequency between the first terminal device and the second terminal device is high frequency or low frequency may be self-defined. For example, the user may choose that when contact frequency in each month is greater than or equal to 10 times, the contact frequency is high frequency; otherwise, the contact frequency is low frequency. When the first terminal device receives a call request from the second terminal device, the first terminal device queries a local call record of the first terminal device, and finds that a quantity of calls between the first terminal device and the second terminal device is eight in a month. In this case, the first terminal device may determine that the contact frequency between the first terminal device and the second terminal device is low frequency, and further determine the privacy protection policy corresponding to the frequency as the sensitive region protection.

In a possible implementation, the first terminal device may determine, based on the location of the first terminal device, the privacy protection policy for performing the video call with the second terminal device.

For example, when the first terminal device positions a kindergarten, the first terminal device may determine that the privacy protection policy for performing the video call with the second terminal device is the sensitive region protection, or the first terminal device may determine to enable the sensitive region protection during the video call with the second terminal device, to be specific, perform the sensitive region protection on an identified child profile picture or kindergarten background. In embodiments of this application, that the first terminal device determines the privacy protection policy based on the location of the first terminal device is not excessively limited.

In a possible implementation, the first terminal device may determine, based on the preference of the user of the first terminal device, the privacy protection policy for performing the video call with the second terminal device.

For example, the first terminal device obtains selection information of the user, and determines the privacy protection policy based on the selection information of the user. For example, the user chooses to enable the sensitive region protection. In this case, the first terminal device determines that the privacy protection policy used when the first terminal device is to perform the video call with the second terminal device or the privacy protection policy used in a process of the video call with the second terminal device is the sensitive region protection.

The first terminal device may further determine the privacy protection policy based on at least one of the contact frequency between the first terminal device and the second terminal device, the location of the first terminal device, and the preference of the user of the first user equipment. For example, the first terminal device may determine the privacy protection policy based on the contact frequency between the first terminal device and the second terminal device and the location of the first terminal device. A solution of determining the privacy protection policy based on at least one of the contact frequency between the first terminal device and the second terminal device, the location of the first terminal device, and the preference of the user of the first user equipment is not excessively limited in embodiments of this application.

That the first terminal device determines the privacy protection policy may be as follows: The first terminal device determines the privacy protection policy used when the first terminal device is to perform the video call with the second terminal device, that is, the first terminal device is in a call phase, and the first terminal device and the second terminal device are not connected. Alternatively, the first terminal device may determine the privacy protection policy used when the first terminal device performs the video call with the second terminal device, that is, the first terminal device and the second terminal device are already connected, and are performing the video call in real time.

Optionally, the first terminal device receives subscription information from a user data server, where the subscription information includes information about the privacy protection policy to which the first terminal device subscribes.

Optionally, the user data server includes but is not limited to an HSS.

Specifically, the first terminal device receives the subscription information from the user data server. The subscription information may be that the first terminal device subscribes to a service of the sensitive region protection.

In a possible implementation, the first terminal device may further determine, based on the subscription information and the first condition, the privacy protection policy for performing the video call with the second terminal device.

S920: The first terminal device sends a request message to a network device, where the request message includes the privacy protection policy. Correspondingly, in step S920, the network device receives the request message.

Specifically, the first terminal device determines the privacy protection policy, but the first terminal device has no capability of executing the privacy protection policy. The first terminal device may send the request message to the network device, where the request message is for requesting the network device to execute the privacy protection policy when the first terminal device and the second terminal device perform the video call.

S930: The network device executes the privacy protection policy for the video call.

In a possible implementation, the network device sends a first calling message to the first terminal device, where the first calling message includes 5-tuple information of a media processing device.

In a possible implementation, the network device sends a second calling message to the second terminal device, where the second calling message includes the 5-tuple information of the media processing device.

The media processing device may be a multimedia resource server (multimedia resource server, MRS).

The 5-tuple information of the media processing device includes a protocol type, a source internet protocol (Internet protocol, IP), a source port, a destination IP address, and a destination port.

In the foregoing solution, the first terminal device determines the privacy protection policy for performing the video call between the first terminal device and the second terminal device, and the network device executes the privacy protection policy for the video call, so that concerns of the user about privacy leakage in a video call process can be alleviated, thereby improving self-confidence of the user, and facilitating application of the video call in a 2B scenario.

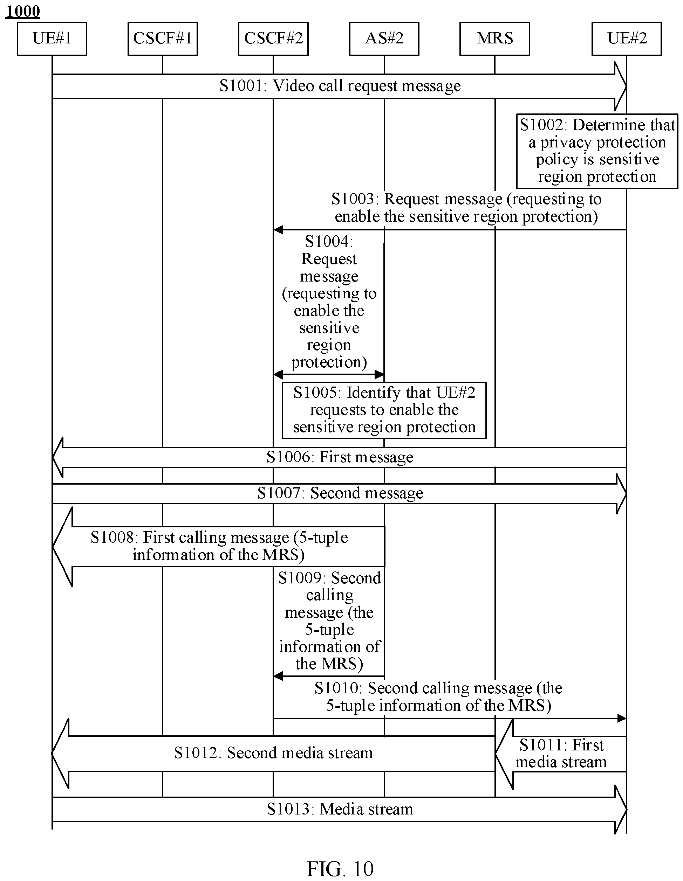

FIG. 10 is a schematic diagram of another video call processing method 1000 according to an embodiment of this application. The method 1000 is a specific implementation process of the method 900. The following describes the video call processing method 1000 provided in embodiments of this application with reference to FIG. 10. An example in which a second terminal device is UE#1, UE#1 corresponds to CSCF#1, a first terminal device is UE#2, and UE#2 corresponds to CSCF#2, AS#2, and an MRS is used for description. The method 1000 includes the following steps.

S1001: LTE#1 sends a video call request message to LTE#2.

For a specific implementation process, refer to S301. For brevity, details are not described again.

S1002: LTE#2 determines that a privacy protection policy is sensitive region protection.

For a specific implementation process, refer to S702. For brevity, details are not described again.

S1003: LTE#2 sends a request message to CSCF#2, where the request message is for requesting AS#2 to enable the sensitive region protection.

S1004: CSCF#2 exchanges, with AS#2, information indicating that LTE#2 requests to enable the sensitive region protection.

Specifically, if UE#2 determines that the privacy protection policy is the sensitive region protection, but UE#2 has no capability of performing sensitive region protection, or LTE#2 is performing a higher-level service and cannot execute the privacy protection policy, UE#2 sends a request message to AS#2, to request AS#2 to enable the sensitive region protection.

A specific implementation process is that LTE#2 sends the request message to CSCF#2, where the request message includes the privacy protection policy, in other words, the request message includes information indicating that LTE#2 determines that the privacy protection policy is the sensitive region protection. The request message may be an alerting message, and the alerting message includes but is not limited to 180, in other words, the 180 message carries the information indicating that LTE#2 determines that the privacy protection policy is the sensitive region protection.

CSCF#2 delivers the message to an AS related to the message. For example, AS#2 is responsible for a service of the sensitive region protection. After completing the service, AS#2 sends the message to CSCF#2. A corresponding procedure is similar to a current procedure, and details are not described in embodiments of this application.

S1005: AS#2 identifies that LTE#2 requests to enable the sensitive region protection function.

For example, AS#2 receives, from CSCF#2, the information indicating that UE#2 requests to enable the sensitive region protection, in other words, detects/identifies that UE#2 requests to enable the sensitive region protection. In other words, that AS#2 detects that UE#2 requests to enable the sensitive region protection function means: A network device is needed for determining to execute the privacy protection policy.

S1006: LTE#1 receives a first message from LTE#2.

S1007: LTE#2 receives a second message from LTE#1.

For a specific implementation process, refer to S304 and S305. For brevity, details are not described again.

If LTE#2 has no capability of performing sensitive region protection or currently cannot perform sensitive region protection, the network device performs a related operation. A specific implementation is as follows: AS#2 sends the video call request to the MRS, and the MRS receives the video call request message from AS#2, and sends a first response message to AS#2, where the first response message is a response to the video call request sent by AS#2 to the MRS. The MRS sends a second response message to AS#2, where the second response message is a response to the first response message. In this way, AS#2 establishes a connection to the MRS.

S1008: AS#2 sends a second calling message to LTE#1, where the second calling message includes 5-tuple information of the MRS.

S1009: AS#2 sends a first calling message to CSCF#2, where the first calling message includes the 5-tuple information of the MRS.

S1010: CSCF#2 sends the first calling message to UE#2, where the first calling message includes the 5-tuple information of the MRS.

For example, when AS#2 establishes the connection to the MRS, AS#2 separately initiates calling messages to UE#1 and UE#2, where the calling message carries the 5-tuple information of the MRS, so as to identify a video stream between LTE#1 and the MRS and a video stream between UE#2 and the MRS. The 5-tuple information of the MRS includes a protocol type, a source IP, a source port, a destination IP address, and a destination port.

Optionally, the first calling message may be a reinvite (reinvite) message.

Optionally, the second calling message may be a reinvite (reinvite) message. It is to be noted that, in step S1008, a message flow direction may be that AS#2 sends the second calling message to CSCF#2, CSCF#2 sends the second calling message to CSCF#1, and CSCF#1 sends the message to UE#1. For brevity of description, some network elements on a side of UE#1 are omitted in this embodiment of this application. However, this does not mean that a corresponding procedure is not performed in this application. In addition, for brevity, some steps are omitted in this application. However, this does not mean that a corresponding procedure is not performed in this application. For example, AS#2 sends the first calling message to CSCF#2, and after receiving the first calling message, CSCF#2 sends a response message to AS#2, where the response message is a response to the first calling message. That is, for brevity of description, some response messages and acknowledgment messages are omitted in this application, but this does not mean that a corresponding procedure is not performed.

An execution sequence of sending the first calling message by AS#2 to LTE#1 and sending the second calling message by AS#2 to LTE#2 is not limited in this application. For example, the step of sending the first calling message by AS#2 to UE#1 and the step of sending the second calling message by AS#2 to UE#2 may be performed simultaneously, or may not be performed simultaneously.

S1011: UE#2 sends a first media stream to the MRS.

The media stream includes but is not limited to an audio stream and the video stream.

For example, UE#2 determines to perform sensitive region protection, and requests the network device to perform sensitive region protection. AS#2 in the network device receives the request message, and establishes the connection to the MRS. In addition, the MRS sends the first calling message to UE#1, and sends the second calling message to UE#2. When UE#2 and UE#1 perform the video call, LTE#2 sends a first video stream to the MRS, and the privacy protection policy is not executed for a video frame that is in the first video stream, that is, the sensitive region protection is not performed for the video frame that is in the first video stream. Before or when UE#2 sends the first video stream, UE#2 also sends information about a sensitive region to the MRS. The MRS identifies, based on the information about the sensitive region, a video frame that corresponds to the sensitive region and that is in the first video stream, and performs sensitivity protection on the identified video frame, for example, performing mosaic or model replacement on a profile picture.

In this application, the sensitive region may be self-defined, and the sensitive region is defined based on an actual video call scenario of users at both ends and a region that needs to be protected. For example, when a user contacts, at home, a property management company to perform remote positioning, a preset sensitive region may be a profile picture of a family member, especially a profile picture of a child. When performing sensitive region protection, a terminal identifies the profile picture, and performs fuzzy processing on the profile picture, for example, by using mosaic or some virtual profile pictures for replacement. For another example, when the video call is connected, if the user does not want to show an environment in which the user is located to the other party, a background may be selected as the sensitive region. A definition of the sensitive region is not excessively limited in embodiments of this application.

S1012: The MRS sends a second media stream to LTE# 1.

In step S1011, the MRS identifies the video frame that corresponds to the sensitive region and that is in the first video stream, and performs sensitivity protection on the video frame, to obtain the second media stream.

The second media stream may also be understood as a media stream for which the sensitive region protection is performed.

S1013: LTE#1 sends a media stream to LTE#2.

If UE#1 does not perform sensitive region protection, the media stream in step S1013 is a media stream that is not processed. More specifically, a video stream in the media stream is normal and is not processed.

It is to be noted that the foregoing solution is described from the perspective of a called device, and may be further applied to a calling device, or may be applied to both the called device and the calling device. For a specific implementation, refer to related descriptions of using the sensitive region protection by the called device. Some simple adaptation may be required, but this also falls within the protection scope of embodiments of this application. If UE#1 also performs sensitive region protection, in step S1013, a video frame, corresponding to a sensitive region, in a video stream in the media stream sent by UE#1 to UE#2 is specially protected.

If the calling device has a capability of performing sensitive region protection, the calling device detects a video frame that corresponds to the sensitive region and that is in a media stream, and performs sensitive region protection on the video frame. If the calling device has no capability of performing sensitive region protection or cannot perform sensitive region protection in a current situation, the calling device needs to establish a connection with an MRS corresponding to the calling device, and sends an unprocessed video stream to the MRS corresponding to the calling device. The MRS detects a video frame that corresponds to the sensitive region and that is in the video stream in a media stream, and performs sensitive region protection. A processed media stream is sent by the MRS corresponding to the calling device to the called device. For a specific implementation process, refer to the foregoing descriptions. Details are not described in this embodiment of this application again.

It is to be noted that both the calling device and the called device may use the sensitive region protection function. When both the calling device and the called device use the sensitive region protection function, sensitive regions of the calling device and the called device may be the same or may be different. To be specific, the sensitive region defined by the calling device is a background, and the sensitive region defined by the called device may be a profile picture, or may be a background. This is not excessively limited in embodiments of this application.

In the foregoing solution, UE#2 determines the privacy protection policy, and requests the network device to execute the privacy protection policy, so that the other party can be prevented from learning of the sensitive region without permission, thereby avoiding unnecessary embarrassment, protecting privacy of the video call users, and improving user confidence.

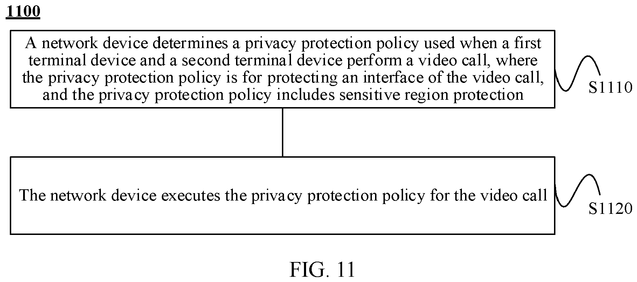

FIG. 11 is a schematic diagram of a video call processing method 1100 according to an embodiment of this application. The method 1100 includes the following steps.

S 1110: A network device determines a privacy protection policy used when a first terminal device and a second terminal device perform a video call, where the privacy protection policy is for protecting an interface of the video call, and the privacy protection policy includes sensitive region protection.

In this embodiment of this application, an example in which the first terminal device acts as a called device and executes the privacy protection policy is still used for description.

Specifically, the network device first queries whether the first terminal device subscribes to a service of a privacy protection policy, and more specifically, queries whether the first terminal device subscribes to a service of the sensitive region protection. The network device queries contact frequency between the first terminal device and the second terminal device, so that the network device determines the privacy protection policy based on subscription information and the contact frequency.

To be specific, when the second terminal device subscribes to the service of the sensitive region protection and the contact frequency between the first terminal device and the second terminal device is low frequency, the network device determines that the privacy protection policy used when the first terminal device and the second terminal device perform the video call is the sensitive region protection.

The sensitive region protection may be understood as protecting some regions that are not suitable for disclosure in a video call process. A sensitive region may be self-defined, to be specific, the sensitive region is self-defined based on a scenario of the video call between the first terminal device and the second terminal device and a region that needs to be protected. For example, when a user contacts, at home, a property management company to perform remote positioning, a preset sensitive region may be defined as a profile picture of a family member, especially a profile picture of a child. In this way, when the sensitive region protection is enabled, identified profile picture parts are all blurred or some virtual profile pictures are used. For another example, when a user connects a video call, because the user is in a special environment and is unwilling to let the other party know, the user may select a background as the sensitive region. Therefore, a definition of the sensitive region is not excessively limited in embodiments of this application.

Whether the contact frequency between the first terminal device and the second terminal device is high frequency or low frequency may be self-defined. For example, the user may choose that when contact frequency in each month is greater than or equal to 10 times, the contact frequency is high frequency; otherwise, the contact frequency is low frequency. If the network device learns that a quantity of calls between the first terminal device and the second terminal device is eight in a month, the network device may determine that the contact frequency between the first terminal device and the second terminal device is low frequency, and further determine a privacy protection policy corresponding to the frequency.

The network device determines that the privacy protection policy used when the first terminal device and the second terminal device perform the video call is a sensitive region protection policy, and may send a third calling message to the first terminal device, where the third calling message indicates the first terminal device to enable the sensitive region protection. The first terminal device receives the third calling message, and sends a response message to the network device, where the response message is a response to the third calling message. If the response message does not include first information, where the first information indicates that the first terminal device executes the privacy protection policy for the video call, the following step is performed.

S 1120: The network device executes the privacy protection policy for the video call.

Specifically, when the first terminal device does not execute the privacy protection policy for the video call, the network device executes the privacy protection policy for the video call.

In a possible implementation, the network device sends a first calling message to the first terminal device, where the first calling message includes 5-tuple information of a media processing device.

In a possible implementation, the network device sends a second calling message to the second terminal device, where the second calling message includes the 5-tuple information of the media processing device.

The media processing device may be a multimedia resource server (multimedia resource server, MRS).

The 5-tuple information of the media processing device includes a protocol type, a source internet protocol (Internet protocol, IP), a source port, a destination IP address, and a destination port.

In the foregoing solution, the first terminal device determines the privacy protection policy for performing the video call between the first terminal device and the second terminal device, and the network device executes the privacy protection policy for the video call, so that concerns of the user about privacy leakage in a video call process can be alleviated, thereby improving self-confidence of the user, and facilitating application of the video call in a 2B scenario.

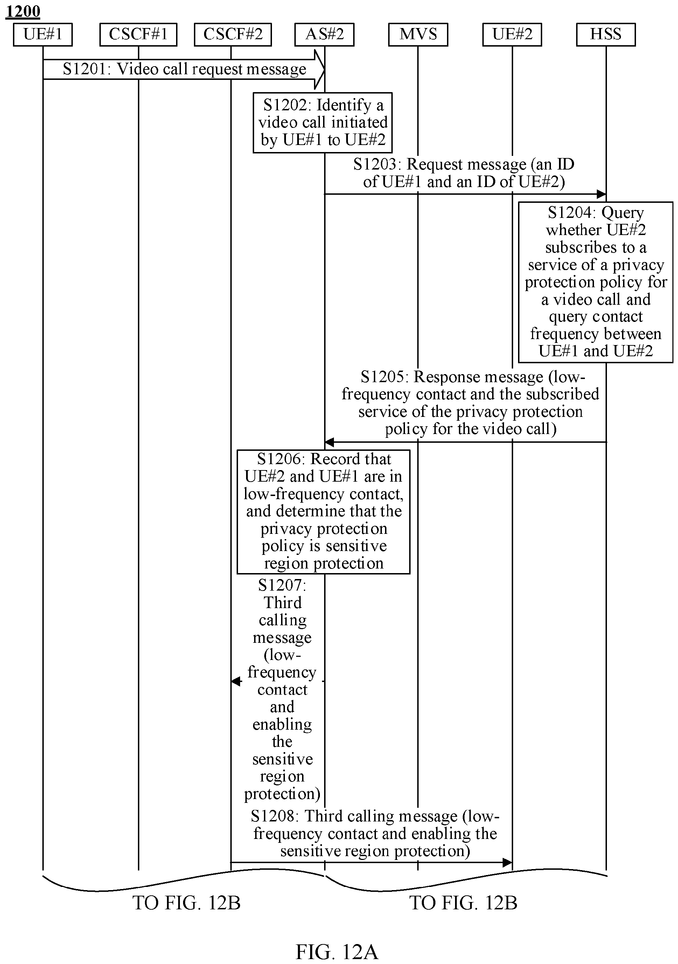

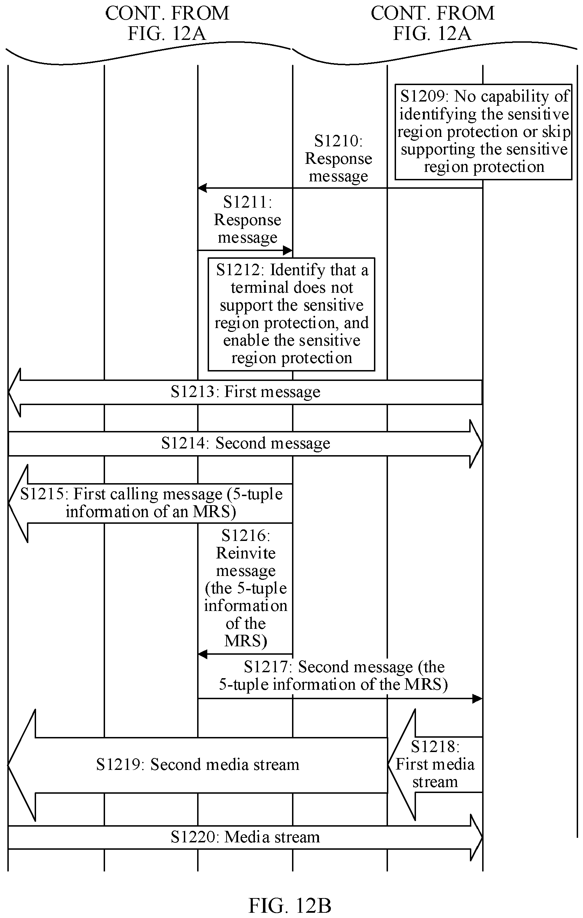

FIG. 12A and FIG. 12B are a schematic diagram of another video call processing method 1200 according to an embodiment of this application. The following describes the video call processing method 1200 provided in embodiments of this application with reference to FIG. 12A and FIG. 12B. An example in which a second terminal device is UE#1, LTE#1 corresponds to CSCF#1, a first terminal device is LTE#2, and LTE#2 corresponds to CSCF#2, an HSS, an MRS, and AS#2 is used for description. The method 1200 includes the following steps.

S1201: LTE#1 sends a video call request message to AS#2.

S1202: AS#2 identifies a video call initiated by UE#1 to LTE#2.

S1203: AS#2 sends a request message to the HSS, where the request message includes an ID of UE#1 and an ID of UE#2.

For a specific implementation process of step S1201 to step S1203, refer to step S801 to step S803. For brevity, details are not described again.

S1204: The HSS determines that UE#1 and UE#2 subscribe to a service of sensitivity protection for the video call, and queries contact frequency between UE#1 and UE#2.

S1205: The HSS sends a response message to AS#2, where the response message carries low-frequency contact information and a service, of a privacy protection policy for the video call, to which UE#2 subscribes.

Specifically, after receiving the video call request message, the HSS may perform query from two perspectives. The HSS queries whether UE#2 subscribes to the service of the privacy protection policy. In addition, the HSS may query the contact frequency between UE#1 and UE#2, to be specific, the HSS may determine the contact frequency between LTE#1 and LTE#2 based on information about UE#1 and UE#2, a local address book, a historical record, and the like. If the contact frequency between LTE#1 and LTE#2 is low, the response message sent by the HSS to CSCF#2 carries information indicating that LTE#1 and LTE#2 are in low-frequency contact, which may also be expressed as follows: The response message carries indication information, and the indication information indicates that contact between LTE#1 and LTE#2 is low-frequency contact. In addition, the response message further carries information about the service, of the privacy protection policy for the video call, to which UE#2 subscribes. That is, after receiving the request message, the HSS not only queries the contact frequency between LTE#1 and LTE#2, but also queries whether LTE#2 subscribes to the service of the privacy protection policy for the video call. If UE#2 subscribes to the service of the privacy protection policy for the video call, the response message further carries the information about the service, of the privacy protection policy for the video call, to which UE#2 subscribes. The response message is a response to the request message in step S1203.

The HSS finds the information about the service, of the privacy protection policy for the video call, to which LTE#2 subscribes, the HSS finds information about that the contact frequency that is between LTE#2 and LTE#1 and that is low frequency, and the two pieces of information may be sent in one response message together, or may be sent in two messages separately. This is not limited in embodiments of this application.

S1206: AS#2 records that the contact between UE#2 and UE#1 is low-frequency contact, and determines that the privacy protection policy is the sensitive region protection.

S1207: AS#2 sends a third calling message to CSCF#2, where the request message carries the information indicating the low-frequency contact and information for enabling the sensitive region protection.

S1208: CSCF#2 sends the third calling message to UE#2, where the request message carries the information indicating the low-frequency contact and the information for enabling the sensitive region protection.

If AS#2 queries, from the HSS, that the contact between LTE#2 and LTE#1 is in low frequency, AS#2 may determine that the privacy protection policy between UE#1 and UE#2 is the sensitive region protection. AS#2 may send a video call request to LTE#2, to indicate LTE#2 to perform sensitive region protection. To be specific, AS#2 first sends the video call request to CSCF#2, and CSCF#2 forwards the video call request to LTE#2.

For example, the third calling message may carry first indication information and second indication information, where the first indication information indicates that the contact between LTE#1 and LTE#2 is low-frequency contact, and the second indication information indicates to enable the sensitive region protection. Specific forms of the information indicating the low-frequency contact and the information for enabling the sensitive region protection are not excessively limited in embodiments of this application.

S1209: LTE#2 cannot identify or does not support the sensitive region protection.

S1210: LTE#2 sends a response message to CSCF#2.

S1211: CSCF#2 sends the response message to AS#2.

Specifically, UE#2 receives the video call request message sent by AS#2, where the request message carries the information indicating LTE#2 to execute the privacy protection policy, in other words, perform sensitive region protection. However, LTE#2 cannot identify the indication information or UE#2 has no capability of executing the privacy protection policy, and the response message sent by LTE#2 to AS#2 does not include first information, where the first information indicates that UE#2 executes the privacy protection policy for the video call, or the response message does not carry information indicating that LTE#2 supports the sensitive region protection, or the response message is a common response message, in other words, only a response to a message received by UE#2, and may not carry substantive content.

That LTE#2 sends the response message to AS#2 may be understood as follows: LTE#2 first sends the response message to CSCF#2, and CSCF#2 sends the response message to AS#2.

S1209: AS#2 identifies that UE#2 does not support the sensitive region protection, and AS#2 enables the sensitive region protection.

Specifically, AS#2 receives the response message, and identifies that the response message does not carry information indicating that UE#2 performs sensitive region protection, or the received response information is a common response message. In this case, AS#2 may determine that LTE#2 supports the sensitive region protection, and may enable the sensitive region protection.

S1213: LTE#1 receives a first message from LTE#2.

S1214: LTE#2 receives a second message from LTE#1.

For a specific implementation process, refer to S304 and S305. For brevity, details are not described again.

For example, if LTE#2 has no capability of performing sensitive region protection or currently cannot perform sensitive region protection, a network device performs a related operation. A specific implementation is as follows: AS#2 sends the video call request to the MRS, and the MRS receives the video call request message from AS#2, and sends a first response message to AS#2, where the first response message is a response to the video call request sent by AS#2 to the MRS. The MRS sends a second response message to AS#2, where the second response message is a response to the first response message. In this way, AS#2 establishes a connection to the MRS.

S1215: AS#2 sends a second calling message to LTE#1, where the second calling message includes 5-tuple information of the MRS.

S1216: AS#2 sends a first calling message to CSCF#2, where the first calling message includes the 5-tuple information of the MRS.

S1217: CSCF#2 sends the first calling message to UE#2, where the first calling message includes the 5-tuple information of the MRS.

S1218: UE#2 sends a first media stream to the MRS.

S1219: The MRS sends a second media stream to UE#1.

S1220: LTE#1 sends a media stream to LTE#2.

For a specific implementation process of step S1215 to step S1220, refer to step S1008 to step S1013. For brevity, details are not described again.

In the foregoing solution, the network device determines the privacy protection policy, and a network side of the network device executes the privacy protection policy, so that the other party can be prevented from learning of the sensitive region without permission, thereby avoiding unnecessary embarrassment, protecting privacy of the video call users, and improving user confidence.

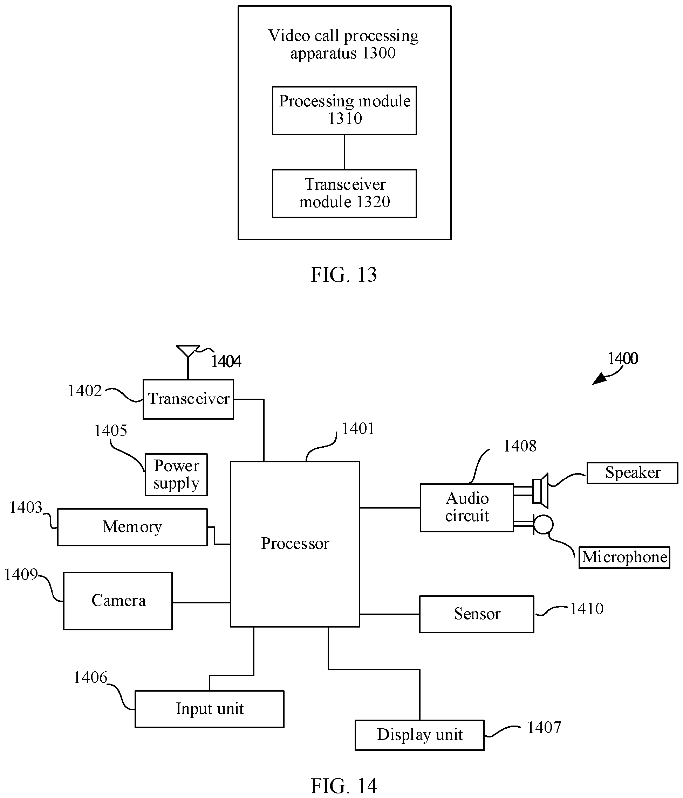

The foregoing describes in detail the video call processing methods in embodiments of this application with reference to FIG. 1 to FIG. 12A and FIG. 12B. The following describes in detail communication apparatuses in embodiments of this application with reference to FIG. 13 to FIG. 15.

FIG. 13 is a schematic block diagram of a communication apparatus 1300 according to an embodiment of this application. As shown in FIG. 13, the apparatus 1300 includes a processing module 1310 and a transceiver module 1320.

The processing module 1310 may be configured to perform content processing of the apparatus, for example, determine a privacy protection policy for performing a video call with a second terminal device. The transceiver module 1320 may be configured to receive information sent by another apparatus, and may be further configured to send information to the another apparatus, for example, send a request message.

In a possible design, the apparatus 1300 may correspond to the first terminal device in the foregoing method embodiments, for example, may be a chip configured in the first terminal device.

Specifically, the apparatus 1300 may correspond to the first terminal device in any one of the methods 200, 300, 600, 700, and 800 according to embodiments of this application. The apparatus 1300 may include modules configured to perform operations performed by the first terminal device in the corresponding methods. In addition, the modules in the apparatus 1300 are separately configured to implement the operations performed by the first terminal device in the corresponding methods. To avoid repetition, details are not described herein again.

Specifically, the processing module 1310 is configured to: determine the privacy protection policy for performing the video call with the second terminal device, where the privacy protection policy is for protecting a call interface of the video call, and the privacy protection policy includes at least one of the following: screenshot protection, screen recording protection, and sensitive region protection; and execute the privacy protection policy for the video call.

The transceiver module 1320 is configured to send, to the second terminal device, a video stream for which the privacy protection policy is executed.

Optionally, the processing module 1310 is further configured to execute the privacy protection policy for a video frame that is in the video stream.

Optionally, if the privacy protection policy is the sensitive region protection, the processing module 1310 is specifically configured to: obtain information about the sensitive region; identify, based on the information about the sensitive region, a video frame that corresponds to the sensitive region and that is in the video stream; and perform blurring processing and/or model replacement on the video frame.

Optionally, if the privacy protection policy is the screenshot protection and/or the screen recording protection, the transceiver module 1320 is further configured to: receive first information from the second terminal device, where the first information indicates that the second terminal device performs a screenshot operation and/or a screen recording operation; and send second information to the second terminal device, where the second information indicates that the first terminal device prohibits the second terminal device from performing the screenshot operation and/or the screen recording operation.

Optionally, the processing module 1310 is specifically configured to determine, based on a first condition, the privacy protection policy for performing the video call with the second terminal device, where the first condition includes at least one of the following: contact frequency between the first terminal device and the second terminal device, a location of the first terminal device, and a preference of a user of the first terminal device.

Optionally, the transceiver module 1320 is further configured to receive subscription information from a user data server, where the subscription information includes information about the privacy protection policy to which the first terminal device subscribes. The processing module is further configured to determine the privacy protection policy based on the first condition and the subscription information.

Optionally, the transceiver module 1320 is further configured to obtain the privacy protection policy from the second terminal device or a network device.

In another possible design, the apparatus 1300 may correspond to the network device in the foregoing method embodiments, for example, may be a chip configured in the network device.

Specifically, the apparatus 1300 may correspond to the network device in any one of the methods 900 and 1000 according to embodiments of this application. The apparatus 1300 may include modules configured to perform operations performed by the network device in the corresponding methods. In addition, the modules in the apparatus 1300 are separately configured to implement the operations performed by the network device in the corresponding methods. To avoid repetition, details are not described herein again.

Specifically, the transceiver module 1320 is configured to receive request information from the first terminal device, where the request information is for requesting the network device to execute the privacy protection policy when the first terminal device and the second terminal device perform the video call, the privacy protection policy is for protecting an interface of the video call, and the privacy protection policy includes the sensitive region protection. The processing module 1310 is configured to execute the privacy protection policy for the video call.

Optionally, the transceiver module 1320 is further configured to send a first calling message to the first terminal device, where the first calling message includes 5-tuple information of a media processing device.

Optionally, the transceiver module 1320 is further configured to send a second calling message to the second terminal device, where the second calling message includes the 5-tuple information of the media processing device.

In another possible design, the apparatus 1300 may correspond to a first terminal device or the second terminal device in the foregoing method embodiments, for example, may be a chip configured in the first terminal device.

Specifically, the apparatus 1300 may correspond to the first terminal device in any one of the methods 900 and 1000 according to embodiments of this application. The apparatus 1300 may include modules configured to perform operations performed by the first terminal device in the corresponding methods. In addition, the modules in the apparatus 1300 are separately configured to implement the operations performed by the first terminal device in the corresponding methods. To avoid repetition, details are not described herein again.

Specifically, the processing module 1310 is configured to determine the privacy protection policy for performing the video call with the second terminal device, where the privacy protection policy is for protecting a call interface of the video call, and the privacy protection policy includes sensitive region protection. The transceiver module 1320 is configured to send request information to a network device, where the request message includes the privacy protection policy, and the request information is for requesting the network device to execute the privacy protection policy when the first terminal device and the second terminal device perform the video call.

Optionally, the processing module 1310 is specifically configured to determine, based on a first condition, the privacy protection policy for performing the video call with the second terminal device, where the first condition includes at least one of the following: contact frequency between the first terminal device and the second terminal device, a location of the first terminal device, and a preference of a user of the first terminal device.

Optionally, the transceiver module 1320 is further configured to: receive a first calling message from the network device, where the first calling message includes 5-tuple information of a media processing device; and send a video stream to the media processing device based on the 5-tuple information, where the privacy protection policy is not executed for a video frame that is in the video stream.

In another possible design, the apparatus 1300 may correspond to the network device in the foregoing method embodiments, for example, may be a chip configured in the network device.

Specifically, the apparatus 1300 may correspond to the network device in any one of the methods 1100 and 1200 according to embodiments of this application. The apparatus 1300 may include modules configured to perform operations performed by the network device in the corresponding methods. In addition, the modules in the apparatus 1300 are separately configured to implement the operations performed by the network device in the corresponding methods. To avoid repetition, details are not described herein again.

Specifically, the processing module 1310 is specifically configured to: determine the privacy protection policy used when a first terminal device and the second terminal device perform the video call, where the privacy protection policy is for protecting a call interface of the video call, and the privacy protection policy includes sensitive region protection; and execute the privacy protection policy for the video call.

Optionally, the processing module 1310 is specifically configured to: when the first terminal device does not execute the privacy protection policy for the video call, execute the privacy protection policy for the video call.

Optionally, the processing module 1310 is specifically configured to: obtain second information and subscription information, where the second information indicates contact frequency between the first terminal device and the second terminal device, and the subscription information includes information about the privacy protection policy to which the first terminal device subscribes; and determine, based on the second information and the subscription information, the privacy protection policy used when the first terminal device and the second terminal device perform the video call.

Optionally, the transceiver module 1320 is further configured to send a first calling message to the first terminal device, where the first calling message includes 5-tuple information of a media processing device.

Optionally, the transceiver module 1320 is further configured to send a second calling message to the second terminal device, where the second calling message includes the 5-tuple information of the media processing device.

FIG. 14 is a schematic diagram of a structure of a first terminal device 1400 according to an embodiment of this application. The first terminal device 1400 may perform a function of the first terminal device in the foregoing method embodiments. As shown in FIG. 14, the first terminal device 1400 includes a processor 1401 and a transceiver 1402. Optionally, the first terminal device 1400 further includes a memory 1403. The processor 1401, the transceiver 1402, and the memory 1403 may communicate with each other through an internal connection path, to transfer a control signal or a data signal. The memory 1403 is configured to store a computer program. The processor 1401 is configured to invoke the computer program from the memory 1403 and run the computer program, to control the transceiver 1402 to receive and send a signal. Optionally, the first terminal device 1400 may further include an antenna 1404 that is configured to send, based on a radio signal, uplink data or uplink control signaling output by the transceiver 1402.

The processor 1401 and the memory 1403 may be combined into a processing apparatus, and the processor 1401 is configured to execute program code stored by the memory 1403, to perform the foregoing functions. During specific implementations, the memory 1403 may alternatively be integrated into the processor 1401, or may be independent of the processor 1401. The processor 1401 may correspond to the processing module in FIG. 13.

The transceiver 1402 may correspond to the transceiver module in FIG. 13, and may also be referred to as a communication unit. The transceiver 1402 may include a receiver (or referred to as a receiver machine or a receiver circuit) and a transmitter (or referred to as a transmitter machine or a transmitter circuit). The receiver is configured to receive a signal, and the transmitter is configured to transmit a signal.

The first terminal device 1400 shown in FIG. 14 can implement processes related to the first terminal device in any one of the method embodiments shown in FIG. 2 to FIG. 12A and FIG. 12B. Operations and/or functions of the modules in the first terminal device 1400 are used to implement corresponding procedures in the foregoing method embodiments. For details, refer to the descriptions in the foregoing method embodiments. To avoid repetition, detailed descriptions are properly omitted herein.

The processor 1401 may be configured to perform an action that is implemented by the first terminal device and that is described in the foregoing method embodiments, and the transceiver 1402 may be configured to perform an action that is described in the foregoing method embodiments and that is sent by the first terminal device to a network device or a second terminal device, or received by the first terminal device from the network device or the second terminal device. For details, refer to the descriptions in the foregoing method embodiments. Details are not described herein again.

Optionally, the first terminal device 1400 may further include a power supply 1405, configured to supply power to various components or circuits in the first terminal device.

In addition, to improve functions of the first terminal device, the first terminal device 1400 may further include one or more of an input unit 1406, a display unit 1407, an audio circuit 1408, a camera 1409, a sensor 1410, and the like. The audio circuit may further include a speaker, a microphone, and the like.

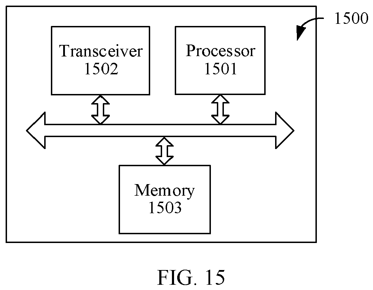

FIG. 15 is a schematic diagram of a structure of a network device according to an embodiment of this application. As shown in FIG. 15, the network device 1500 includes a processor 1501 and a transceiver 1502. Optionally, the network device 1500 further includes a memory 1503. The processor 1501, the transceiver 1502, and the memory 1503 may communicate with each other through an internal connection path, to transfer a control signal and/or a data signal. The memory 1503 is configured to store a computer program. The processor 1501 is configured to invoke the computer program from the memory 1503 and run the computer program, to control the transceiver 1502 to receive and send a signal.

The processor 1501 and the memory 1503 are combined into a processing apparatus, and the processor 1501 is configured to execute program code stored by the memory 1503, to perform the foregoing functions. During specific implementation, the memory 1503 may alternatively be integrated into the processor 1501, or may be independent of the processor 1501.

It can be understood that, the processor in embodiments of this application may be a central processing unit (Central Processing Unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logical device, a discrete gate or transistor logical device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It is to be noted that the memory of the systems and methods described in this specification includes but is not limited to these and any memory of another proper type.

According to the methods provided in embodiments of this application, this application further provides a computer program product. The computer program product includes instructions. When the instructions are run by a processor, the method of the terminal device in any one of the foregoing method embodiments is enabled to be implemented.

According to the methods provided in embodiments of this application, this application further provides a computer program product. The computer program product includes instructions. When the instructions are run by a processor, the method of the first terminal device in any one of the foregoing method embodiments is enabled to be implemented.

According to the methods provided in embodiments of this application, this application further provides a computer program product. The computer program product includes instructions. When the instructions are run by a processor, the method of the network device in any one of the foregoing method embodiments is enabled to be implemented.

According to the methods provided in embodiments of this application, this application further provides a computer-readable medium. The computer-readable medium includes instructions. When the instructions are run by a processor, the method of the first terminal device in the foregoing method embodiments is enabled to be implemented.

According to the methods provided in embodiments of this application, this application further provides a computer-readable medium. The computer-readable medium includes instructions. When the instructions are run by a processor, the method of the network device in the foregoing method embodiments is enabled to be implemented.

According to the methods provided in embodiments of this application, this application further provides a chip system. The chip system includes a processor, configured to invoke a computer program from a memory and run the computer program, so that a communication device in which the chip system is installed is enabled to perform the method of the first terminal device in any one of the foregoing method embodiments.

According to the methods provided in embodiments of this application, this application further provides a chip system. The chip system includes a processor, configured to invoke a computer program from a memory and run the computer program, so that a communication device in which the chip system is installed is enabled to perform the method of the network device in any one of the foregoing method embodiments.

According to the method provided in embodiments of this application, this application further provides a system, including at least one of the foregoing one or more terminal devices and the foregoing one or more network devices.

An embodiment of this application further provides a processing apparatus, including a processor and an interface. The processor is configured to perform the communication method in any one of the foregoing method embodiments.

It can be understood that the processing apparatus may be a chip. For example, the processing apparatus may be a field programmable gate array (field programmable gate array, FPGA), may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component, may be a system-on-a-chip (system-on-a-chip, SoC), may be a central processing unit (central processing unit, CPU), may be a network processor (network processor, NP), may be a digital signal processor (digital signal processor, DSP), may be a micro controller unit (micro controller unit, MCU), or may be a programmable logic device (programmable logic device, PLD) or another integrated chip. The processing apparatus may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly performed and completed by using a hardware decoding processor, or may be performed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

All or some of the foregoing embodiments may be implemented through software, hardware, firmware, or any combination thereof. When software is used to implement embodiments, all or a part of embodiments may be implemented in a form of a computer program product. The computer program product includes one or more computer instructions. When the computer instructions are loaded and executed for a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be a usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive (solid-state drive, SSD)), or the like.

The network device and the terminal device in the foregoing apparatus embodiments completely correspond to the network device or the terminal device in the method embodiments, and a corresponding module or unit performs a corresponding step. For example, a communication unit (a transceiver) performs a receiving or sending step in the method embodiments, and a processing module (a processor) may perform a step other than sending and receiving. For a function of a specific unit, refer to corresponding method embodiments. There may be one or more processors.

Terms such as "component", "module", and "system" used in this specification indicate computer-related entities, hardware, firmware, a combination of hardware and software, software, or software being executed. For example, a component may be but is not limited to a process that runs on a processor, a processor, an object, an executable file, an execution thread, a program, or a computer. As illustrated by using figures, both a computing device and an application that runs on the computing device may be components. One or more components may reside within a process or an execution thread, and a component may be located on one computer or distributed between two or more computers. In addition, these components may be executed from various computer-readable media that store various data structures. For example, the components may communicate by using a local or remote process based on a signal having one or more data packets (for example, data from two components interacting with another component in a local system, in a distributed system, or across a network such as the internet interacting with another system based on the signal).

It can be understood that an "embodiment" mentioned in the entire specification means that particular characteristics, structures, or features related to the embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It can be understood that, in embodiments of this application, numbers "first", "second", and the like are merely for distinguishing between different objects, for example, to distinguish between different network devices, and do not constitute a limitation on the scope of embodiments of this application. Embodiments of this application are not limited thereto.

In this application, "when" and "if" mean that a network element performs corresponding processing in an objective situation, and are not intended to limit time. The terms do not mean that the network element is required to have a determining action during implementation, and do not mean any other limitation.

It can be understood that in embodiments of this application, "B corresponding to A" indicates that B is associated with A, and that B may be determined based on A. However, determining B based on A does not mean that B is determined based only on A, and B may be determined based on A and/or other information.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that in embodiments of this application, the terminal device and/or the radio access network device may perform some or all steps in embodiments of this application. These steps or the operations are merely examples. In embodiments of this application, other operations or variations of various operations may be further performed. In addition, the steps may be performed in a sequence different from a sequence presented in embodiments of this application, and not all the operations in embodiments of this application may be performed.

A person of ordinary skill in the art may be aware that, with reference to the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiments. Details are not described herein again.

In the several embodiments provided in this application, it can be understood that the disclosed system, apparatuses, and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solution of this application essentially, or the part contributing to a conventional technology, or some of the technical solution may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A video call processing method, comprising:
determining, by a first terminal device, a privacy protection policy for performing a video call with a second terminal device, wherein the privacy protection policy is for protecting a call interface of the video call, and the privacy protection policy comprises at least one of the following: screenshot protection, screen recording protection, and sensitive region protection; and
executing, by the first terminal device, the privacy protection policy for the video call.

2. The method according to claim 1, wherein the executing, by the first terminal device, the privacy protection policy for the video call comprises:
sending, by the first terminal device to the second terminal device, a video stream for which the privacy protection policy is executed.

3. The method according to claim 2, wherein if the privacy protection policy is the sensitive region protection, the executing, by the first terminal device, the privacy protection policy for the video call comprises:
obtaining, by the first terminal device, information about a sensitive region;
identifying, by the first terminal device based on the information about the sensitive region, a video frame that corresponds to the sensitive region and that is in the video stream; and
performing, by the first terminal device, blurring processing and/or model replacement on the video frame.

4. The method according to claim 1, wherein if the privacy protection policy is the screenshot protection and/or the screen recording protection, the executing, by the first terminal device, the privacy protection policy for the video call comprises:
receiving, by the first terminal device, first information from the second terminal device, wherein the first information indicates that the second terminal device performs a screenshot operation and/or a screen recording operation; and
sending, by the first terminal device, second information to the second terminal device, wherein the second information indicates that the first terminal device prohibits the second terminal device from performing the screenshot operation and/or the screen recording operation.

5. The method according to any one of claims 1 to 4, wherein the determining, by a first terminal device, a privacy protection policy for performing a video call with a second terminal device comprises:
determining, by the first terminal device based on a first condition, the privacy protection policy for performing the video call with the second terminal device, wherein the first condition comprises at least one of the following: contact frequency between the first terminal device and the second terminal device, a location of the first terminal device, and a preference of a user of the first terminal device.

6. The method according to claim 5, wherein the method further comprises:
receiving, by the first terminal device, subscription information from a user data server, wherein the subscription information comprises information about a service, of the privacy protection policy, to which the first terminal device subscribes; and
the determining, by the first terminal device, the privacy protection policy based on a first condition comprises:
determining, by the first terminal device, the privacy protection policy based on the first condition and the subscription information.

7. The method according to any one of claims 1 to 4, wherein the determining, by a first terminal device, a privacy protection policy for performing a video call with a second terminal device comprises:
obtaining, by the first terminal device, the privacy protection policy from the second terminal device or a network device.

8. A video call processing method, comprising:
receiving, by a network device, request information from a first terminal device, wherein the request information is for requesting the network device to execute a privacy protection policy when the first terminal device and a second terminal device perform a video call, the privacy protection policy is for protecting a call interface of the video call, and the privacy protection policy comprises sensitive region protection; and
executing, by the network device, the privacy protection policy for the video call.

9. The method according to claim 8, wherein the method further comprises:
sending, by the network device, a first calling message to the first terminal device, wherein the first calling message comprises 5-tuple information of a media processing device.

10. The method according to claim 8 or 9, wherein the method further comprises:
sending, by the network device, a second calling message to the second terminal device, wherein the second calling message comprises the 5-tuple information of the media processing device.

11. A video call processing method, comprising:
determining, by a first terminal device, a privacy protection policy for performing a video call with a second terminal device, wherein the privacy protection policy is for protecting a call interface of the video call, and the privacy protection policy comprises sensitive region protection; and
sending, by the first terminal device, request information to a network device, wherein the request information comprises the privacy protection policy, and the request information is for requesting the network device to execute the privacy protection policy when the first terminal device and the second terminal device perform the video call.

12. The method according to claim 11, wherein the determining, by a first terminal device, a privacy protection policy for performing a video call with a second terminal device comprises:
determining, by the first terminal device based on a first condition, the privacy protection policy for performing the video call with the second terminal device, wherein the first condition comprises at least one of the following: contact frequency between the first terminal device and the second terminal device, a location of the first terminal device, and a preference of a user of the first terminal device.

13. The method according to claim 11 or 12, wherein the method further comprises:
receiving, by the first terminal device, a first calling message from the network device, wherein the first calling message comprises 5-tuple information of a media processing device; and
sending, by the first terminal device, a video stream to the media processing device based on the 5-tuple information.

14. A video call processing method, comprising:
determining, by a network device, a privacy protection policy used when a first terminal device and a second terminal device perform a video call, wherein the privacy protection policy is for protecting a call interface of the video call, and the privacy protection policy comprises sensitive region protection; and
executing, by the network device, the privacy protection policy for the video call.

15. The method according to claim 14, wherein the executing, by the network device, the privacy protection policy for the video call comprises:
when the first terminal device does not execute the privacy protection policy for the video call, executing, by the network device, the privacy protection policy for the video call.

16. The method according to claim 14 or 15, wherein the method further comprises:
obtaining, by the network device, second information and subscription information, wherein the second information indicates contact frequency between the first terminal device and the second terminal device, and the subscription information comprises information about the privacy protection policy to which the first terminal device subscribes; and
the determining, by a network device, a privacy protection policy used when a first terminal device and a second terminal device perform a video call comprises:
determining, by the network device based on the second information and the subscription information, the privacy protection policy used when the first terminal device and the second terminal device perform the video call.

17. The method according to any one of claims 14 to 16, wherein the method further comprises:
sending, by the network device, a first calling message to the first terminal device, wherein the first calling message comprises 5-tuple information of a media processing device.

18. The method according to any one of claims 14 to 17, wherein the method further comprises:
sending, by the network device, a second calling message to the second terminal device, wherein the second calling message comprises the 5-tuple information of the media processing device.

19. A video call processing method, comprising:
determining, by a first terminal device, a privacy protection policy for performing a video call with a second terminal device, wherein the privacy protection policy is for protecting a call interface of the video call, and the privacy protection policy comprises sensitive region protection;
sending, by the first terminal device, request information to a network device, wherein the request information comprises the privacy protection policy, and the request information is for requesting the network device to execute the privacy protection policy when the first terminal device and the second terminal device perform the video call;
receiving, by the network device, the request information from the first terminal device; and
executing, by the network device, the privacy protection policy for the video call.

20. The method according to claim 19, wherein the determining, by a first terminal device, a privacy protection policy for performing a video call with a second terminal device comprises:
determining, by the first terminal device based on a first condition, the privacy protection policy for performing the video call with the second terminal device, wherein the first condition comprises at least one of the following: contact frequency between the first terminal device and the second terminal device, a location of the first terminal device, and a preference of a user of the first terminal device.

21. The method according to claim 19 or 20, wherein the method further comprises:
sending, by the network device, a first calling message to the first terminal device, wherein the first calling message comprises 5-tuple information of a media processing device;
receiving, by the first terminal device, the first calling message from the network device; and
sending, by the first terminal device, a video stream to the media processing device based on the 5-tuple information.

22. The method according to any one of claims 19 to 21, wherein the method further comprises:
sending, by the network device, a second calling message to the second terminal device, wherein the second calling message comprises the 5-tuple information of the media processing device.

23. A video call processing apparatus, comprising modules configured to perform steps of the method according to any one of claims 1 to 7, modules configured to perform steps of the method according to any one of claims 8 to 10, modules configured to perform steps of the method according to any one of claims 11 to 13, or modules configured to perform steps of the method according to any one of claims 14 to 18.

24. A communication apparatus, wherein the communication apparatus comprises a processor and a storage medium, and the storage medium stores instructions; and when the instructions are run by the processor, the communication apparatus is enabled to perform the method according to any one of claims 1 to 7, the method according to any one of claims 8 to 10, the method according to any one of claims 11 to 13, or the method according to any one of claims 14 to 18.

25. A computer-readable storage medium, wherein the computer-readable storage medium comprises instructions; and when the instructions are run by a processor, the method according to any one of claims 1 to 7, the method according to any one of claims 8 to 10, the method according to any one of claims 11 to 13, or the method according to any one of claims 14 to 18 is enabled to be performed.

26. A computer program product, wherein the computer program product comprises instructions; and when the instructions are run by a processor, the method according to any one of claims 1 to 7, the method according to any one of claims 8 to 10, the method according to any one of claims 11 to 13, or the method according to any one of claims 14 to 18 is enabled to be performed.

27. A communication system, comprising a network device and a first terminal device, wherein
the network device is configured to perform the method according to any one of claims 8 to 10, and the first terminal device is configured to perform the method according to any one of claims 11 to 13.
